# EUROPÄISCHE PATENTSCHRIFT

(11) **EP 4 776 178 B1**
(45) Veröffentlichungstag und Bekanntmachung des Hinweises auf die Patenterteilung: **21.10.2026**
(21) Anmeldenummer: 25150765.3
(22) Anmeldetag: 08.01.2025
(51) Int. Cl.: G06K 7/14, G06V 10/44, G06V 10/56, G06V 30/224

(54) **VERFAHREN UND SYSTEM ZUM ERKENNEN UND/ODER AUSLESEN VON STRICHCODE FÜR POSTSENDUNGEN**
METHOD AND SYSTEM FOR RECOGNIZING AND/OR READING BARCODES FOR POSTAL ITEMS
PROCÉDÉ ET SYSTÈME DE RECONNAISSANCE ET/OU DE LECTURE DE CODES À BARRES POUR ENVOIS POSTAUX

(43) Veröffentlichungstag der Anmeldung: 15.07.2026
(73) Patentinhaber: SICK AG, 79183 Waldkirch (DE)
(72) Erfinder: Steinbuch, Jonathan, 79211 Denzlingen (DE); Zimmer, Julian, 79114 Freiburg (DE)
(74) Vertreter: Manitz Finsterwald Patent- und Rechtsanwaltspartnerschaft mbB

(56) Entgegenhaltungen:
- CN-U- 201 820 242
- JP-A- H 113 397
- KR-A- 20050 097 917
- US-B1- 6 176 428

## Beschreibung

Die Erfindung betrifft ein Verfahren und ein System zum Erkennen und/oder Auslesen von Strichcode, bevorzugt mit balkenhöhenpositionscodierten Strichcodesymbologien, z.B. POSTNET, PLANET, Intelligent Mail Barcode und/oder Mailmark, insbesondere für Postsendungen, aus Bilddaten über den Strichcode.

Strichcodes, insbesondere für Postsendungen, können in mittels Kameras aufgenommener Bilddaten erkannt und/oder ausgelesen werden. Anhand des erkannten und/oder ausgelesen Strichcodes kann daraufhin ein Industrieprozess gesteuert werden. Zum Beispiel kann mithilfe Erkennens und/oder Auslesens eines auf einer Postsendung angebrachten Strichcodes ein Transportband gesteuert werden, um die Postsendung für eine interne Warenbewegung und/oder in ein Zielgebiet weiterzuleiten.

Bei dem Erkennen und/oder Auslesen eines Strichcodes besteht Bedarf, eine sichere Lesung auch untere schwierigen Bedingungen, wie beispielsweise Wellungen, Verzerrungen und/oder Verschmutzungen des Strichcodes, bereitzustellen.

Bekannte Systeme basieren oft auf rechenintensiven Bildverarbeitungsschritten, wie zum Beispiel Bildrotationen, was insgesamt den Rechenaufwand erhöhen kann.

CN 201 820 242 U beschreibt eine Vorrichtung zur Erfassung von postalischen Strichcodes.

JP H11 3397 A beschreibt ein Gerät zum Lesen von Symbolinformationen.

Der Erfindung liegt die Aufgabe zugrunde, Verfahren und Systeme zum Erkennen und/oder Auslesen von Strichcode robuster und/oder effizienter zu gestalten.

Zur Lösung der Aufgabe ist ein Verfahren und ein System mit den Merkmalen der unabhängigen Ansprüche vorgesehen.

Das erfindungsgemäße Verfahren zum Erkennen und/oder Auslesen von balkenhöhenpositionscodiertem Strichcode, insbesondere für Postsendungen, aus Bilddaten über den Strichcode, umfasst: Bestimmen zumindest eines Balkenhöhenparameters und einer Position eines ersten Balkens einer Vielzahl an Balken des Strichcodes, wobei der Balkenhöhenparameter vorzugsweise eine Balkenhöhe und/oder zumindest einen Endpunkt in Balkenlängsrichtung umfasst, Schätzen, insbesondere anfängliches Schätzen, zumindest eines Strichcodehöhenparameters des Strichcodes anhand des Balkenhöhenparameters des ersten Balkens, wobei der Strichcodehöhenparameter vorzugsweise eine Strichcodehöhe, eine Position einer Taktspur, eine obere Strichcodehöhenposition und/oder eine untere Strichcodehöhenposition umfasst, ausgehend von der Position des ersten Balkens in eine erste Richtung, Bestimmen zumindest eines Balkenhöhenparameters und einer Position eines, insbesondere direkt, benachbarten zweiten Balkens der Vielzahl an Balken des Strichcodes, Überprüfen des geschätzten Strichcodehöhenparameters anhand des Balkenhöheparameters des zweiten Balkens, und Zuweisen eines Balkentyps zu jedem der Balken anhand des bestimmten Balkenhöhenparameters des betreffenden Balkens und anhand des geschätzten Strichcodehöhenparameters.

Der Erfindung liegt der Gedanke zugrunde, den geschätzten Strichcodehöhenparameter, anhand dessen den Balken ein Balkentyp zugewiesen wird, bei fortschreitender Erfassung der Balken zu überprüfen, insbesondere anzupassen und/oder zu verfeinern. Dabei stellt der erste Balken den Ausgangspunkt für die Erfassung des Strichcodes dar; der Strichcode muss nicht schon am Anfang vollständig erfasst werden. Insgesamt kann so die Robustheit, insbesondere gegenüber Wellungen, Verzerrungen und/oder Verschmutzungen des Strichcodes, und die Effizienz des Verfahrens zum Erkennen und/oder Auslesen von Strichcodes im Vergleich zu herkömmlichen Verfahren erhöht werden.

Dem ersten Balken kann anhand des anfänglich geschätzten Strichcodehöhenparameters und dem zweiten Balken anhand des überprüften geschätzten Strichcodehöhenparameters ein Balkentyp zugewiesen werden. Alternativ oder zusätzlich kann dem ersten Balken anhand des überprüften geschätzten Strichcodehöhenparameters ein Balkentyp zugewiesen werden. Die Zuweisung eines Balkentyps zu dem ersten Balken kann anhand des überprüften geschätzten Strichcodehöhenparameters überprüft und gegebenenfalls rückwirkend angepasst werden.

Es versteht sich, dass das Verfahren, insbesondere automatisch, mittels einer (elektronischen) Verarbeitungsvorrichtung bzw. Recheneinrichtung ausgeführt werden kann.

Die Bilddaten können mittels einer Kamera, zum Beispiel als 2D-Grauwertbild oder 2D-Farbwertbild, aufgenommen und/oder erhalten werden.

Der Balkenhöhenparameter des ersten und/oder zweiten Balkens kann zusätzlich eine Balkenlängsrichtung des ersten beziehungsweise des zweiten Balkens umfassen. Die Balkenlängsrichtung eines Balkens kann zum Beispiel durch seine beiden Endpunkte in Balkenlängsrichtung festgelegt sein. Alternativ kann die Balkenlängsrichtung, insbesondere zunächst, als Orthogonale der Fortschrittsrichtung (also bevorzugt als Orthogonale der ersten Richtung) festgelegt sein. Wie später beschrieben, kann die Balkenlängsrichtung (auch im Nachhinein) per linearer Regression bestimmt (oder angepasst) werden.

Die Taktspur entspricht einem Bereich der Balken, welcher in jedem der Balken vorhanden ist. Die Höhe der Taktspur kann zum Beispiel ein Drittel der Strichcodehöhe sein. Die Taktspur ist zwischen der unteren Strichcodehöhenposition und der oberen Strichcodehöhenposition vorhanden.

Bei der (anfänglichen) Schätzung des Strichcodehöhenparameters anhand des Balkenhöhenparameters des ersten Balkens kann beispielsweise die Strichcodehöhe auf die Balkenhöhe des ersten Balkens gesetzt werden. Alternativ oder zusätzlich kann die obere und/oder untere Strichcodehöhenposition auf den entsprechenden Endpunkt des ersten Balkens gesetzt werden.

Bei dem Überprüfen des geschätzten Strichcodehöhenparameters kann beispielsweise der (anfänglich) geschätzte Strichcodehöhenparameter bestätigt werden, der geschätzte Strichcodehöhenparameter anhand des Balkenhöhenparameters des ersten Balkens und anhand des Balkenhöhenparameters des zweiten Balkens, z.B. als Mittelwert oder Medianwert der beiden Balkenhöhenparameter, neu geschätzt werden oder der Strichcodehöhenparameter allein anhand des Balkenhöhenparameters des zweiten Balkens neu geschätzt werden.

Die Zuweisung eines Balkentyps zu den Balken kann fortschreitend erfolgen, d.h. von Balken zu Balken und/oder sobald der betreffende Balken erfasst wurde. Alternativ oder zusätzlich kann die Zuweisung eines Balkentyps zu den Balken nach vollständiger Erfassung aller Balken des Strichcodes erfolgen. Auf diese Weise können, insbesondere fortschreitend, die in dem Strichcode vorhandenen Balkentypen erkannt und zu einer Vielzahl an Balkentypen hinzugefügt werden. Bei fortschreitender Erfassung der Balken und/oder nach vollständiger Erfassung aller Balken kann beispielsweise ein Strichcodetyp anhand der aufgefundenen Vielzahl an Balkentypen erkannt und/oder ein anfänglich angenommener Strichcodetype anhand der aufgefundenen Balkentypen überprüft werden.

Ein Beispiel für einen Strichcodetyp ist ein sogenannter Vierzustands("Fourstate")-Strichcodetyp, bei welchem als Balkentypen sogenannte "Ascender", "Descender", "Full Bars", und "Tracker" vorhanden sein können. Bei einem solchen Vierzustands- Strichcodetyp befindet sich die Taktspur in der Mitte des Strichcodes, d.h. in der Mitte der "Full Bars", welche von der unteren bis zur oberen Strichcodehöhenposition reichen. Ein "Tracker" kann im Wesentlichen die Höhe der Taktspur aufweisen und befindet sich in der Mitte des Strichcodes. Ein "Ascender" ist von der Taktspur aus zu der oberen Strichcodehöhenposition orientiert. Dagegen ist ein "Descender" von der Taktspur aus zu der unteren Strichcodehöhenposition orientiert. Ein weiteres Beispiel für einen Strichcodetyp ist ein sogenannter Zweizustands("Twostate")-Strichcodetyp, bei welchem als Balkentypen "Tracker" und "Full Bars" vorhanden sein können. Die Taktspur und somit auch die Tracker befinden sich dabei entweder bei der oberen oder bei der unteren Strichcodehöhenposition, also auf der oberen beziehungsweise unteren Seite des Strichcodes, je nach Lage des Strichcodes in einem Lesebereich.

Gemäß einer Ausführungsform ist die erste Richtung parallel zu einer Richtung des Strichcodes und/oder orthogonal zu der Balkenlängsrichtung des ersten Balkens. Die Richtung (d.h. grobe Richtung) des Strichcodes kann durch Vorverarbeiten der Bilddaten bekannt sein.

Gemäß einer Ausführungsform wird die erste Richtung überprüft. Dabei kann die erste Richtung anhand einer Balkenlängsrichtung des zweiten Balkens, z.B. als Orthogonale zu der Balkenlängsrichtung des zweiten Balkens, angepasst und/oder neu bestimmt werden.

Gemäß einer Ausführungsform wird ausgehend von der Position des zweiten Balkens in die, vorzugsweise überprüfte, insbesondere angepasste und/oder neu bestimmte, erste Richtung ein Balkenhöhenparameter und eine Position eines zu dem zweiten Balken, insbesondere direkt, benachbarten dritten Balkens der Vielzahl an Balken des Strichcodes bestimmt. **In** anderen Worten kann es sich um einen iterativen Prozess handeln; für den weiteren Ablauf des Verfahrens stellt der dritte Balken (für die nächste Iteration) also gleichsam den zweiten Balken und der zweite Balken gleichsam den ersten Balken dar. Der geschätzte Strichcodehöhenparameter kann anhand des Balkenhöhenparameters des dritten Balkens erneut überprüft werden und dem dritten Balken kann anhand des bestimmten Balkenhöhenparameters des dritten Balkens und anhand des (erneut überprüften) geschätzten Strichcodehöhenparameters ein Balkentyp zugewiesen werden. Zusätzlich können die bisher zugewiesenen Balkentypen überprüft werden. Insbesondere kann dem ersten und/oder zweiten Balken anhand des erneut überprüften geschätzten Strichcodehöhenparameters und anhand des jeweiligen Balkenhöhenparameters erneut ein Balkentyp zugewiesen werden, insbesondere falls der geschätzte Strichcodehöhenparameter bei der erneuten Überprüfung angepasst und/oder dem dritten Balken ein bisher noch nicht aufgefundener Balkentyp zugewiesen wurde. Die erste Richtung kann wiederum überprüft werden. Dabei kann die erste Richtung anhand einer Balkenlängsrichtung des dritten Balkens, z.B. als Orthogonale zu der Balkenlängsrichtung des dritten Balkens, erneut angepasst und/oder erneut bestimmt werden.

Gemäß einer Ausführungsform wird der geschätzte Strichcodehöhenparameter bei dem Überprüfen anhand des Balkenhöhenparameters des zweiten Balkens verbessert und/oder verfeinert.

Gemäß einer Ausführungsform wird bei dem Überprüfen des geschätzten Strichcodehöhenparameters der geschätzte Strichcodehöhenparameter bestätigt, wenn der Balkenhöhenparameter des zweiten Balkens unter Berücksichtigung eines Toleranzbereichs höher oder niedriger liegt als der geschätzte Strichcodehöhenparameter.

Gemäß einer Ausführungsform wird der Strichcodehöhenparameter allein anhand des Balkenhöhenparameters des zweiten Balkens neu geschätzt, wenn der Balkenhöhenparameter des zweiten Balkens unter Berücksichtigung des Toleranzbereichs höher liegt ist als der geschätzte Strichcodehöhenparameter.

Gemäß einer Ausführungsform wird der Strichcodehöhenparameter anhand des Balkenhöhenparameters des ersten Balkens und anhand des Balkenhöhenparameters des zweiten Balkens, z.B. als arithmetischer Mittelwert oder Medianwert der beiden Balkenhöhenparameter, neu geschätzt, wenn der Balkenhöhenparameter des zweiten Balkens unter Berücksichtigung des Toleranzbereichs bei dem geschätzten Strichcodehöhenparameter liegt.

Gemäß einer Ausführungsform umfasst das Verfahren ferner ein Vorverarbeiten der Bilddaten, um eine Position zumindest eines Punkts auf dem Strichcode und eine (grobe) Richtung des Strichcodes zu bestimmen, wobei der erste Balken erfasst wird, indem die Bilddaten, insbesondere von Bildpunkt zu Bildpunkt, entlang einer anhand der bestimmten Position des Punkts auf dem Strichcode und der Richtung des Strichcodes festgelegten Linie abgetastet werden, Kantenübergänge, insbesondere als Hell-Dunkel- oder Dunkel-Hell-Übergänge, entlang der Linie erkannt und deren jeweilige Position und Orientierung bestimmt werden, und der erste Balken anhand eines aus den bestimmten Kantenübergängen ausgewählten ersten Paares aus entgegengesetzt zueinander orientierten Kantenübergängen, d.h. ein Paar aus einem aufeinanderfolgenden Hell-Dunkel- und Dunkel-Hell-Übergang, festgelegt wird. Die abgetastete Linie kann einen Startpunkt und einen Endpunkt aufweisen. Der Startpunkt kann dem bestimmten Punkt auf dem Strichcode entsprechen. Die Position des ersten Balkens kann dann beispielsweise als Mittelwert zwischen den beiden Kantenübergängen bestimmt werden. Die Bestimmung der Kantenübergänge bzw. Kantenpunkte auf der abgetasteten Linie zusammen mit deren Orientierung (Hell-Dunkel- oder Dunkel-Hell-Übergang) kann mithilfe eines Sobel-Filters erfolgen. Falls die nachfolgende Vermessung des ersten Balkens fehlschlägt, kann ein anderes Paar aus entgegengesetzt zueinander orientierten Kantenübergängen ausgewählt werden, um den ersten Balken festzulegen. Falls kein geeignetes Paar aus Kantenübergängen erkannt wird, kann eine leicht versetzte Linie (zum Beispiel um zumindest einen Bildpunkt parallel versetzt) abgetastet werden, bis ein geeignetes Paar aus Kantenübergängen erkannt wird oder eine maximale Anzahl an Versuchen erreicht wird, d.h. eine maximale Anzahl an Linien abgetastet wurde. Bleibt das Erfassen des ersten Balkens erfolglos, kann ein Fehlersignal ausgegeben werden.

Gemäß einer Ausführungsform wird die Position der Taktspur in Balkenlängsrichtung in der Mitte der Balken angenommen. Alternativ wird die Taktspur an einem der beiden Enden der Balken angenommen. Vorzugsweise wird bei der anfänglichen Schätzung basierend auf dem Balkenhöhenparameter des ersten Balkens die Position der Taktspur in Balkenlängsrichtung in der Mitte des ersten Balkens angenommen. In anderen Worten wird vorzugsweise anfänglich ein Vierzustands-Strichcodetyp angenommen.

Gemäß einer Ausführungsform weisen die Bilddaten Bildpunkte auf, wobei die den Balken entsprechenden Bildpunkte einen Grauwert gleich oder kleiner als einen Grauwertgrenzwert oder einen Farbwert in einem (vorab festgelegten) Farbwertbereich aufweisen.

Gemäß einer Ausführungsform werden bei der Bestimmung des Balkenhöhenparameters des zweiten Balkens, und auch bei der Bestimmung des Balkenhöhenparameters jedes weiteren Balkens, Bildfehler in dem betreffenden Balken ignoriert, wenn festgestellt wird, dass Bildpunkte (und insbesondere zumindest eine bestimmte Anzahl an Bildpunkten) mit einem Grauwert gleich oder kleiner als der Grauwertgrenzwert oder mit einem Farbwert innerhalb des Farbwertbereichs in einem Bildbereich oberhalb des Bildfehlers und unterhalb oder bei der geschätzten oberen Strichcodehöhenposition vorhanden sind und/oder dass Bildpunkte mit einem Grauwert gleich oder kleiner als der Grauwertgrenzwert oder mit einem Farbwert innerhalb des Farbwertbereichs in einem Bildbereich unterhalb des Bildfehlers und oberhalb oder bei der geschätzten unteren Strichcodehöhenposition vorhanden sind. In anderen Worten können Bildfehler, deren Bildpunkte einen Grauwert oder eine Farbe aufweisen können, die dem Hintergrund des Strichcodes entspricht, ignoriert werden, wenn festgestellt wird, dass Balken-Bildpunkte oberhalb und/oder unterhalb des Bildfehlers vorhanden sind. Auf diese Weise kann die Robustheit des Verfahrens erhöht werden.

Insbesondere werden Bildfehler nur dann ignoriert, sofern die Bildfehler vollständig zwischen der geschätzten unteren und oberen Strichcodehöhenposition liegen. Auf diese Weise kann zusätzlich vermieden werden, z.B. Druckelemente außerhalb des Strichcodes fälschlicherweise als Strichcode zu interpretieren, wodurch die Robustheit des Verfahrens weiter erhöht werden kann.

Gemäß einer Ausführungsform wird die geschätzte obere und/oder untere Strichcodehöhenposition von dem ersten Balken in die erste Richtung projiziert.

Gemäß einer Ausführungsform wird basierend auf den bisher zugewiesenen Balkentypen eine Plausibilität der Projektion der geschätzten oberen und/oder unteren Strichcodehöhenposition geprüft.

Die Prüfung der Plausibilität kann insbesondere umfassen, dass der Strichcodehöhenparameter für den zweiten Balken bzw. für spätere Balken verändert wird. Dabei kann der Strichcodehöhenparameter aktiv angepasst werden (und nicht nur dem Verlauf des Strichcodes folgend projiziert werden). Beispielsweise dann, wenn die vorherige Annahme (der Strichcodehöhenparameter und der Balkentypen) aufgrund des neu zuletzt vermessenen Balkens unplausibel geworden ist. In einem solchen Fall kann das später noch genauer erläuterte Backtracking ausgelöst werden, wobei eventuell die vorherigen Balkentypen neu bestimmt werden.

Gemäß einer Ausführungsform umfasst der Balkenhöhenparameter des zweiten Balkens einen oberen und einen unteren Endpunkt in Balkenlängsrichtung.

Es versteht sich, dass der zweite Balken zumindest im Wesentlichen die gleiche Größe aufweisen kann, wie der erste Balken aber auch größer oder kleiner sein kann. Auf die Handhabung dieser verschiedenen Fälle wird in den nachfolgenden Absätzen eingegangen.

Gemäß einer Ausführungsform wird bei der Überprüfung des geschätzten Strichcodehöhenparameters die geschätzte obere und untere Strichcodehöhenposition bestätigt, wenn der obere Endpunkt des zweiten Balkens niedriger liegt als die projizierte obere Strichcodehöhenposition und/oder wenn der untere Endpunkt des zweiten Balkens höher liegt als die projizierte untere Strichcodehöhenposition. Der Abgleich der Endpunkte mit den bisher geschätzten Strichpunkthöhenpositionen kann dabei unter Berücksichtigung eines Toleranzbereichs erfolgen, d.h. die geschätzte obere und untere Strichcodehöhenposition wird bestätigt, wenn der obere Endpunkt des zweiten Balkens unter Berücksichtigung des Toleranzbereichs, also deutlich, niedriger liegt als die projizierte obere Strichcodehöhenposition und/oder wenn der untere Endpunkt des zweiten Balkens unter Berücksichtigung des Toleranzbereichs, also deutlich, höher liegt als die projizierte untere Strichcodehöhenposition.

Gemäß einer Ausführungsform wird bei der Überprüfung des geschätzten Strichcodehöhenparameters die obere und/oder untere Strichcodehöhenposition anhand des oberen beziehungsweise unteren Endpunkts des zweiten Balkens neu geschätzt, wenn der obere Endpunkt des zweiten Balkens höher liegt als die projizierte obere Strichcodehöhenposition beziehungsweise wenn der untere Endpunkt des zweiten Balkens niedriger liegt als die projizierte untere Strichcodehöhenposition. Zum Beispiel kann in diesen Fällen die untere Strichcodehöhenposition auf den unteren Endpunkt des zweiten Balkens und/oder die die obere Strichcodehöhenposition auf den oberen Endpunkt des zweiten Balkens gesetzt werden. Es versteht sich, dass auch hier der Abgleich der Endpunkte des zweiten Balkens mit den projizierten Strichpunkthöhenpositionen unter Berücksichtigung eines Toleranzbereichs erfolgen kann.

Gemäß einer Ausführungsform wird bei der Überprüfung des geschätzten Strichcodehöhenparameters die obere und/oder untere Strichcodehöhenposition anhand des oberen Endpunkts des ersten Balkens und anhand des oberen Endpunkts des zweiten Balkens beziehungsweise anhand des unteren Endpunkts des ersten Balkens und anhand des unteren Endpunkts des zweiten Balkens neu geschätzt, wenn der obere Endpunkt des zweiten Balkens in einem Toleranzbereich um die projizierte obere Strichcodehöhenposition beziehungsweise wenn der untere Endpunkt des zweiten Balkens in einem Toleranzbereich um die projizierte untere Strichcodehöhenposition liegt.

Gemäß einer Ausführungsform wird ein Wechsel eines Balkentyps von einem Ascender zu einem Descender oder von einem Decender zu einem Ascender angenommen, wenn die Balkenhöhe des zweiten Balkens der geschätzten Strichcodehöhe entspricht und wenn der obere Endpunkt des zweiten Balkens niedriger beziehungsweise höher liegt als die obere Strichcodehöhenposition und der untere Endpunkt des zweiten Balkens niedriger beziehungsweise höher liegt als die untere Strichcodehöhenposition. Dies kann insbesondere der Fall sein, wenn bisher maximal zwei Balkentypen, d.h. Full Bars und/oder Tracker, aufgefunden wurden.

Es sei klargestellt, dass unter dem oben genannten Wechsel des Balkentyps zu verstehen ist, dass in der tatsächlichen Balkenabfolge ein Descender auf einen Ascender folgt oder umgekehrt. Bis zu dem genannten Wechsel des Balkentyps kann zumindest einer der Balken als "Full Bar" angenommen worden sein. Durch den Versatz des iterativ nächsten Balkens zu diesem Balken muss diese Annahme revidiert werden. Dadurch kann dann festgestellt werden, dass es sich bei den Balken, deren Typ gewechselt wird, um eine Kombination aus einem Ascender und einem Descender hintereinander handeln muss.

Gemäß einer Ausführungsform wird eine Balkenbreite des ersten Balkens bestimmt.

Gemäß einer Ausführungsform wird der zweite Balken erfasst, indem ein Balkenabstand anhand der Balkenbreite des ersten Balkens geschätzt wird und zumindest eine Linie parallel zu der ersten Richtung und/oder orthogonal zu der Balkenlängsrichtung des ersten Balkens abgetastet wird, bis zumindest ein zweites Paar aus entgegengesetzt zueinander orientierten Kantenübergangen erfasst wird und/oder bis ein auf dem geschätzten Balkenabstand basierender Abstandsgrenzwert erreicht ist. Die Linie kann beispielsweise ausgehend von einem Kantenübergang des ersten Balkens abgetastet werden. Mit dem Balkenabstand kann ein Abstand zwischen den Mittelpunkten benachbarter Balken gemeint sein. Vorzugsweise wird für alle weiteren Balken der Balkenabstand anhand eines rollierenden Mittelwerts der vorherigen Balkenabstände geschätzt. Der Balkenabstand kann zum Beispiel als Vielfaches der Balkenbreite des ersten Balkens geschätzt werden. Der Balkenabstand kann zum Beispiel einen Wert zwischen 100% und 500%, bevorzugt zwischen 150% und 300%, der Balkenbreite des ersten Balkens aufweisen, wobei sich in der Praxis Werte um 200%, also z.B. zwischen 185% und 215% als bevorzugt herausgestellt haben. Vorzugsweise werden zwei oder mehr Linien, und zum Beispiel fünf in Balkenlängsrichtung verteilte Linien, abgetastet. Der Abstandsgrenzwert kann ein Vielfaches der geschätzten Balkenabstands sein, und bevorzugt das doppelte des geschätzten Balkenabstands sein. Wird der Abstandsgrenzwert erreicht, ohne dass zumindest ein zweites Paar aus entgegengesetzt zueinander orientierten Kantenübergangen erfasst wird, kann ein Signal ausgegeben werden und/oder die Suche nach Balken in die erste Richtung beendet werden, da z.B. ein Ende des Strichcodes erreicht ist.

Gemäß einer Ausführungsform wird zumindest eine Linie in einem Bereich der geschätzten Position der Taktspur und zumindest eine Linie außerhalb des Bereichs der geschätzten Position der Taktspur abgetastet. Vorzugsweise (z.B. bei Annahme eines Vierzustandscodes) werden zumindest drei Linien in dem Bereich der geschätzten Position der Taktspur, zumindest eine Linie oberhalb des Bereichs der geschätzten Position der Taktspur und zumindest eine Linie unterhalb des Bereichs der geschätzten Position der Taktspur abgetastet. Alternativ können (z.B. unter Annahme eines Zweizustandscodes mit am Rand liegender Taktspur) auch zwei Linien auf derselben Seite der Taktspur abgetastet werden.

Gemäß einer Ausführungsform wird für jede abgetastete Linie ein Mittelpunkt zwischen den Kantenübergängen der erfassten nächsten Paare aus entgegengesetzt zueinander orientierten Kantenübergängen bestimmt.

Gemäß einer Ausführungsform werden die bestimmten Mittelpunkte in Gruppen gruppiert (bzw. "geclustert") und nur diejenige Gruppe, welche dem geschätzten Balkenabstand am nächsten liegt, wird für die Erfassung des zweiten Balkens verwendet. Auf diese Weise können die Mittelpunkte für die Erfassung des zweiten Balkens gefiltert werden, was die Robustheit verbessert.

Gemäß einer Ausführungsform wird anhand von zumindest zwei bestimmten Mittelpunkten mittels linearer Regression die Balkenlängsrichtung des zweiten Balkens bestimmt. Alternativ wird die Balkenlängsrichtung des ersten Balkens als die Balkenlängsrichtung des zweiten Balkens festgelegt. Letzteres kann insbesondere dann erfolgen, wenn keine zumindest zwei Mittelpunkte für eine lineare Regression bestimmt werden können.

Gemäß einer Ausführungsform wird mithilfe der bestimmten Balkenlängsrichtung des zweiten Balkens der obere und/oder untere Endpunkt des zweiten Balkens bestimmt.

Gemäß einer Ausführungsform wird für die nachfolgende Erfassung des zu dem zweiten Balken benachbarten dritten Balkens die geschätzte obere und/oder untere Strichcodehöhenposition von dem zweiten Balken in eine Richtung orthogonal zu der Balkenlängsrichtung des zweiten Balkens projiziert. Auf diese Weise kann die Richtung für die Projektion der geschätzten oberen und/oder unteren Strichcodehöhenposition von Balken zu Balken angepasst werden, was die Robustheit erhöht.

Gemäß einer Ausführungsform wird der zweite Balken verifiziert, indem geprüft wird, ob oberhalb des oberen Endpunkts des zweiten Balkens und/oder unterhalb des unteren Endpunkts des zweiten Balkens Bildpunkte, und insbesondere zumindest eine bestimmte Anzahl an Bildpunkten, vorhanden sind, welche einen Grauwert oberhalb eines Grauwertgrenzwertes oder einen Farbwert außerhalb eines Farbwertbereichs aufweisen (also zu dem Hintergrund des Strichcodes gehören) und/oder ob ein Kontrast eines Grauwerts oder Farbwerts des zweiten Balkens zu dem Grauwert oder Farbwert der Bildpunkte oberhalb und/oder unterhalb des oberen beziehungsweise unteren Endpunkts gleich oder größer als ein Kontrastgrenzwert ist.

Ein Ende des Strichcodes in die erste Richtung kann beispielsweise basierend darauf gefunden, dass kein weiterer benachbarter Balken mehr, insbesondere bei der Abtastung der Linie, in die erste Richtung erfasst werden kann. Zusätzlich oder alternativ kann ein Ende des Strichcodes in die erste Richtung basierend darauf gefunden werden, dass das Verifizieren des weiteren Balkens fehlschlägt.

Gemäß einer Ausführungsform umfasst des Verfahren: Wiederholen des Bestimmens eines Balkenhöhenparameters eines benachbarten Balkens und Wiederholen des Überprüfens des Strichcodehöhenparameters in die, vorzugsweise iterativ überprüfte, insbesondere iterativ angepasste und/oder neu berechnete, erste Richtung und in eine der ersten Richtung entgegengesetzte, vorzugsweise iterativ überprüfte, insbesondere iterativ angepasste und/oder neu berechnete, zweite Richtung bis alle Balken der Vielzahl an Balken erfasst worden sind. Ausführungsgemäß umfasst das Verfahren ferner das Zuweisen eines Balkentyps zu jedem der Balken der Vielzahl an Balken anhand des bestimmten Balkenhöhenparameters des betreffenden Balkens und anhand des, insbesondere iterativ, geschätzten Strichcodehöhenparameters. Auf diese Weise kann der gesamte Strichcode ausgehend von dem erfassten ersten Balken erfasst werden, ohne dass die gesamten Bilddaten analysiert werden müssen und/oder ohne dass der Strichcode schon am Anfang vollständig erfasst werden muss. Insgesamt kann die Robustheit und Effizienz erhöht werden.

Gemäß einer Ausführungsform wird für die Zuweisung eines Balkentyps zu dem betreffenden Balken ein Abstand eines oberen und/oder unteren Endpunkts des betreffenden Balkens zu der geschätzten, und insbesondere projizierten, oberen beziehungsweise unteren Strichcodehöhenposition bestimmt und der Balkentyp danach festgelegt, ob der bestimmte Abstand gleich oder kleiner als ein Abstandsgrenzwert ist.

Der Abstandsgrenzwert ist vorzugsweise unter Annahme eines Strichcodetyps festgelegt. Vorzugsweise wird anfänglich ein Vierzustands-Code angenommen. Die Annahme des Strichcodetyps kann später geändert werden. In anderen Worten kann die Zuweisung eines Balkentyps zu dem betreffenden Balkan anhand der relativen Ausschöpfung der geschätzten Strichcodehöhe an den Endpunkten des Balkens erfolgen. Unter Annahme eines Vierzustands- Strichcodetyps kann ein Balken, welcher die Strichcodehöhe nach oben und nach unten im Wesentlichen voll ausschöpft, als ein "Full Bar" bestimmt werden, ein Balken, welcher die Strichcodehöhe nur nach oben oder nur nach unten im Wesentlichen voll ausschöpft, als ein "Ascender" beziehungsweise "Descender" bestimmt werden, und ein Balken, welcher die Strichcodehöhe weder nach oben noch nach unten ausschöpft, als ein "Tracker" bestimmt werden. Unter Annahme eines Zweizustands-Strichcodetyps kann ein Balken, welcher die Strichcodehöhe nach oben und nach unten im Wesentlichen voll ausschöpft, als ein "Full Bar" bestimmt werden und ein Balken, welcher die Strichcodehöhe nur nach oben oder nur nach unten im Wesentlichen voll ausschöpft, als ein "Tracker" bestimmt werden.

Gemäß einer Ausführungsform wird die Zuweisung der Balkentypen zu den Balken, unter Annahme des Strichcodetyps, auf Plausibilität geprüft, wobei bei einer Verneinung der Plausibilität die Zuweisung der Balkentypen zu den Balken unter Annahme eines anderen Strichcodetyps mit zumindest einem anderen Abstandsgrenzwert überprüft wird. Für die Annahme eines Strichcodetyps kann, insbesondere für Vierzustandscodes, eine normale Orientierung und auch eine Orientierung auf dem Kopf geprüft werden. Die Plausibilität kann beispielsweise verneint werden, wenn das Anzahlverhältnis der verschiedenen Balkentypen zueinander für den anfänglich angenommene Strichcodetyp unmöglich ist. Die Zuweisung der Balkentypen kann dann zum Beispiel unter Annahme eines Zweizustands-Codes wiederholt werden, was zumindest einen anderen Abstandsgrenzwert impliziert, sodass alle nicht annähernd ausschöpfende Balken als Tracker bestimmt werden.

Gemäß einer Ausführungsform unterscheiden sich die Balkentypen in der Balkenhöhe. Zusätzlich oder alternativ unterscheiden sich die Balkentypen in der Orientierung der Balken relativ zu der Position der Taktspur.

Gemäß einer Ausführungsform wird bei einer Anpassung des geschätzten Strichcodehöhenparameters und/oder bei der Zuweisung eines bisher noch nicht zugewiesenen Balkentyps die Zuweisung eines Balkentyps für die bisher erfassten Balken überprüft, und insbesondere gegebenenfalls rückwirkend angepasst. **In** anderen Worten kann ein sogenanntes "Backtracking" erfolgen.

Gemäß einer Ausführungsform wird die geschätzte Position der Taktspur fortschreitend anhand der bisher zugewiesenen Balkentypen überprüft.

Gemäß einer Ausführungsform umfasst das Verfahren ferner das Bestimmen und/oder Ausgeben eines Ausgabeparameters basierend auf den zugewiesenen Balkentypen. Der Ausgabeparameter kann beispielsweise auf der zugewiesenen Sequenz an Balkentypen basieren, insbesondere die zugewiesene Sequenz an Balkentypen umfassen. Zusätzlich oder alternativ kann anhand bekannter Verfahren die zugewiesene Sequenz an Balkentypen zu einem Strichcodeergebnis verarbeitet werden und mit dem Ausgabeparameter ausgegeben werden. Der ausgegebene Ausgabeparameter kann zum Steuern eines Industrieprozesses verwendet werden, zum Beispiel zum Steuern eines Transportbands.

Weiterer Gegenstand der Erfindung ist ein System zum Erkennen und/oder Auslesen von balkenhöhenpositionscodiertem Strichcode, insbesondere für Postsendungen, aus Bilddaten über den Strichcode, umfassend eine Kamera, welche ausgebildet ist, Bilddaten, insbesondere über den Strichcode, aufzunehmen, und eine Verarbeitungsvorrichtung, welche ausgebildet ist, anhand der Bilddaten über den Strichcode zumindest einen Balkenhöhenparameter und eine Position eines ersten Balkens einer Vielzahl an Balken des Strichcodes zu bestimmen, wobei der Balkenhöhenparameter vorzugsweise eine Balkenhöhe und/oder zumindest einen Endpunkt in Balkenlängsrichtung umfasst, zumindest einen Strichcodehöhenparameter des Strichcodes anhand des Balkenhöhenparameters des ersten Balkens zu schätzen, wobei der Strichcodehöhenparameter vorzugsweise eine Strichcodehöhe, eine Position einer Taktspur, eine obere Strichcodehöhenposition und/oder eine untere Strichcodehöhenposition umfasst, ausgehend von der Position des ersten Balkens in eine erste Richtung zumindest einen Balkenhöhenparameter und eine Position eines benachbarten zweiten Balkens der Vielzahl an Balken des Strichcodes zu bestimmen, den geschätzten Strichcodehöhenparameter anhand des Balkenhöheparameters des zweiten Balkens zu überprüfen, und einen Balkentyp zu jedem der Balken anhand des bestimmten Balkenhöhenparameters des betreffenden Balkens und anhand des geschätzten Strichcodehöhenparameters zuzuweisen.

Die Verarbeitungsvorrichtung kann einen Prozessor, Mikroprozessor oder Server umfassen. Die Verarbeitungsvorrichtung bzw. deren Funktionen kann, ganz oder teilweise, durch die Kamera, eine separate Einheit und/oder einen Remote-Server bereitgestellt werden.

Das System kann ferner eine Beleuchtungseinheit zum Beleuchten eines Lesebereichs umfassen, in welchem der Strichcode vorhanden ist.

Es versteht sich, dass das bezüglich des erfindungsgemäßen Verfahrens Beschriebene auch für das System gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines Strichcodes eines Vierzustands-Strichcodetyps;
- Fig. 2: eine schematische Darstellung eines Strichcodes eines Zweizustands-Strichcodetyps;
- Fig. 3: eine schematische Darstellung eines ersten Balkens eines Strichcodes;
- Fig. 4: eine schematische Darstellung eines zweiten Balkens eines Strichcodes;
- Fig. 5: eine schematische Darstellung eines zweiten Balkens eines Strichcodes;
- Fig. 6: eine schematische Darstellung eines zweiten Balkens eines Strichcodes;
- Fig. 7: eine bildliche Darstellung von Bilddaten über einen Strichcode;
- Fig. 8: eine bildliche Darstellung von Bilddaten über einen Strichcode;
- Fig. 9: eine bildliche Darstellung von Bilddaten über einen Strichcode;
- Fig. 10: eine bildliche Darstellung von Bilddaten über einen Strichcode;
- Fig. 11: eine bildliche Darstellung von Bilddaten über einen Strichcode;
- Fig. 12: eine bildliche Darstellung von Bilddaten über einen Strichcode;
- Fig. 13: eine bildliche Darstellung von Bilddaten über einen Strichcode.

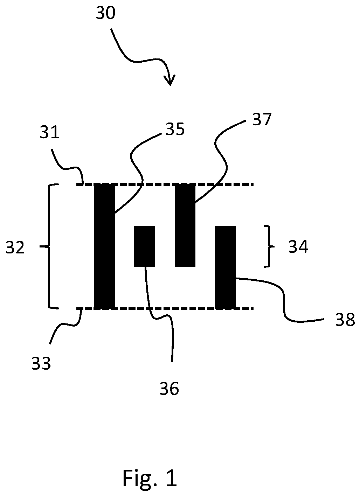

Fig. 1 zeigt eine schematische Darstellung eines Strichcodes 30, insbesondere für Postsendungen, wie er aus Bilddaten mittels den hierin beschriebenen Vorgehensweisen erkannt und/oder ausgelesen werden kann. Wie in Fig. 1 dargestellt kann ein Strichcodehöhenparameter des Strichcodes 30 eine Strichcodehöhe 32, eine Position einer Taktspur 34, eine obere Strichcodehöhenposition 31 und/oder eine untere Strichcodehöhenposition 33 umfassen.

Dabei zeigt Fig. 1 einen Strichcode 30 eines sogenannten Vierzustands("Four-state")-Strichcodetyps, bei welchem als Balkentypen sogenannte Full Bars 35, Tracker 36, Ascender 37 und Descender 38 vorhanden sein können. Die Taktspur 34 befindet sich (vertikal gesehen) in der Mitte des Strichcodes 30, d.h. in der Mitte der Full Bar 35, welche von der unteren Strichcodehöhenposition 33 bis zur oberen Strichcodehöhenposition 31 reicht. Ein Tracker 36 kann im Wesentlichen die Höhe der Taktspur 34 aufweisen und befindet sich in der Mitte des Strichcodes 30. Ein Ascender 37 ist von der Taktspur 34 aus zu der oberen Strichcodehöhenposition 31 orientiert. Dagegen ist ein Descender 38 von der Taktspur 34 aus zu der unteren Strichcodehöhenposition 33 orientiert.

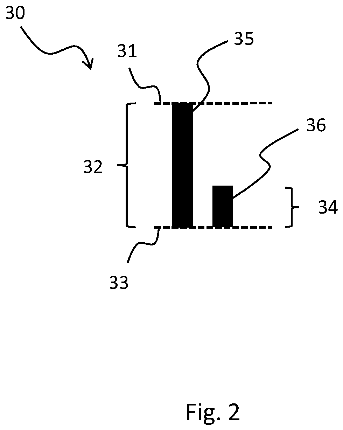

Fig. 2 zeigt einen Strichcode 30 eines sogenannten Zweizustands("Twostate")-Strichcodetyps. Wie in Fig. 2 dargestellt können als Balkentypen Full Bars 35 und Tracker 36 vorhanden sein. Die Taktspur 34 und somit auch die Tracker 36 befinden sich dabei bei einer der beiden Strichcodehöhenpositionen 31, 33, also auf der oberen beziehungsweise unteren Seite des Strichcodes 30 je nach Lage des Strichcodes in einem Lesebereich.

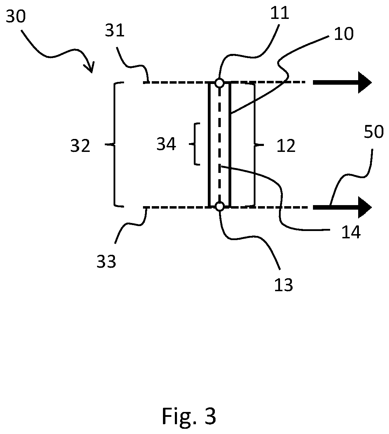

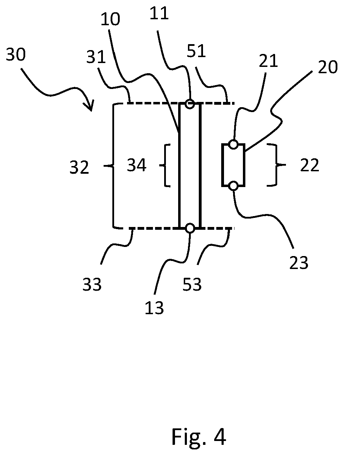

Fig. 3 zeigt eine schematische Darstellung eines ersten Balkens 10 einer Vielzahl an Balken eines Strichcodes 30, wie er mit einem hierin beschriebenen Verfahren aus Bilddaten über den Strichcode 30 erkannt und/oder ausgelesen werden kann. Dabei wird anfänglich zumindest ein Balkenhöhenparameter und eine Position des ersten Balkens 10 bestimmt, wobei der Balkenhöhenparameter eine Balkenhöhe 12, einen oberen Endpunkt 11 in Balkenlängsrichtung 14 und/oder einen unteren Endpunkt 13 in Balkenlängsrichtung 14 umfassen kann. Ein Strichcodehöhenparameter des Strichcodes 30 kann dann anhand des Balkenhöhenparameters des ersten Balkens 10 geschätzt werden, wobei der Strichcodehöhenparameter eine Strichcodehöhe 32, eine Position einer Taktspur 34, eine obere Strichcodehöhenposition 31 und/oder eine untere Strichcodehöhenposition 33 umfassen kann. Bei der (anfänglichen) Schätzung des Strichcodehöhenparameters anhand des Balkenhöhenparameters des ersten Balkens 10 kann die Strichcodehöhe 32 auf die Balkenhöhe 12 des ersten Balkens 10, die obere Strichcodehöhenposition 31 auf den oberen Endpunkt 11 des ersten Balkens 10, die untere Strichcodehöhenposition 33 auf den unteren Endpunkt 13 des ersten Balkens 10 und die Position der Taktspur 34 in Balkenlängsrichtung in die Mitte des ersten Balkens 10 gesetzt werden. Ausgehend von der Position des ersten Balkens 10 in eine ersten Richtung 50 kann dann ein benachbarter zweiter Balken 20 der Vielzahl an Balken des Strichcodes 30 gesucht werden, wie in Fig. 4 bis Fig. 6 dargestellt. Insbesondere können die geschätzte obere und untere Strichcodehöhenposition 31, 33 von dem ersten Balken 10 in die erste Richtung 50 projiziert werden. Die erste Richtung 50 kann parallel zu einer groben Richtung des Strichcodes 30 sein, wobei die grobe Richtung durch Vorverarbeitung der Bilddaten über den Strichcode 30 bekannt sein kann. Alternativ kann die erste Richtung 50 orthogonal zu der Balkenlängsrichtung 14 des ersten Balkens 10 sein.

Wie in Fig. 4 bis Fig. 6 dargestellt kann zumindest ein Balkenhöhenparameter und eine Position des zweiten Balkens 20 bestimmt werden, wobei der Balkenhöhenparameter des zweiten Balkens 20 ebenfalls eine Balkenhöhe 22, einen oberen Endpunkt 21 in Balkenlängsrichtung und einen unteren Endpunkt 23 in Balkenlängsrichtung umfassen kann. Der geschätzte Strichcodehöhenparameter kann dann anhand des Balkenhöheparameters des zweiten Balkens 20 überprüft werden.

Wie in Fig. 4 dargestellt wird bei dem Überprüfen des geschätzten Strichcodehöhenparameters die Balkenhöhe 32 und die obere und untere Strichcodehöhenposition 31, 33 nicht angepasst bzw. bestätigt, wenn der obere Endpunkt 21 des zweiten Balkens 20 (unter Berücksichtigung eines Toleranzbereichs und daher deutlich) niedriger liegt als die projizierte obere Strichcodehöhenposition 51 und wenn der untere Endpunkt 23 des zweiten Balkens 20 (unter Berücksichtigung eines Toleranzbereichs und daher deutlich) höher liegt als die projizierte untere Strichcodehöhenposition 53. Auch die Balkenhöhe 22 des zweiten Balkens 20 ist in diesem Fall deutlich kleiner als die geschätzte Strichcodehöhe 32, welche in der Folge nicht angepasst bzw. bestätigt wird.

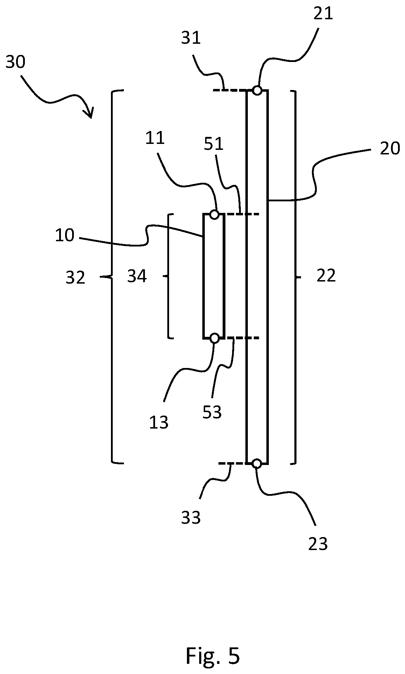

Wie in Fig. 5 dargestellt kann bei dem Überprüfen des geschätzten Strichcodehöhenparameters die obere und untere Strichcodehöhenposition 31, 33 allein anhand des oberen Endpunkts 21 beziehungsweise unteren Endpunkts 23 des zweiten Balkens 20 neu geschätzt werden, wenn der obere Endpunkt 21 des zweiten Balkens 20 (unter Berücksichtigung eines Toleranzbereichs und daher deutlich) höher liegt als die projizierte obere Strichcodehöhenposition 51 beziehungsweise wenn der untere Endpunkt 23 des zweiten Balkens (unter Berücksichtigung eines Toleranzbereichs und daher deutlich) niedriger liegt als die projizierte untere Strichcodehöhenposition 53. Zum Beispiel kann die untere Strichcodehöhenposition 33 auf den unteren Endpunkt 23 des zweiten Balkens 20 und/oder die die obere Strichcodehöhenposition 31 auf den oberen Endpunkt 21 des zweiten Balkens 20 gesetzt werden. Wie in Fig. 5 gezeigt kann die Balkenhöhe 22 des zweiten Balkens 20 deutlich größer sein als die bisher geschätzte Strichcodehöhe 32 und die Balkenhöhe 22 des zweiten Balkens 20 wird in der Folge die neu geschätzte Strichcodehöhe 32.

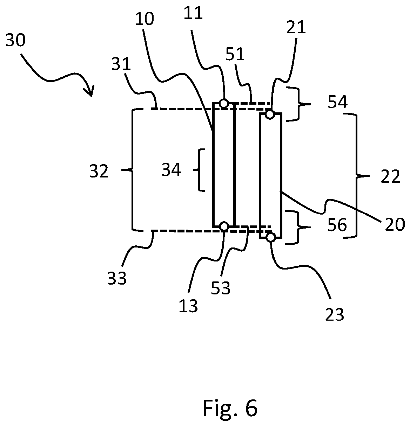

Wie in Fig. 6 dargestellt kann bei dem Überprüfen des geschätzten Strichcodehöhenparameters die obere und untere Strichcodehöhenposition 31, 33 anhand des oberen Endpunkts 11 des ersten Balkens 10 und anhand des oberen Endpunkts 21 des zweiten Balkens 20 beziehungsweise anhand des unteren Endpunkts 13 des ersten Balkens 10 und anhand des unteren Endpunkts 23 des zweiten Balkens 20 zum Beispiel als Mittelwert zwischen den Endpunkten beider Balken neu geschätzt werden, wenn der obere Endpunkt 21 des zweiten Balkens 20 in einem Toleranzbereich 54 um die projizierte obere Strichcodehöhenposition 51 beziehungsweise wenn der untere Endpunkt 23 des zweiten Balkens 20 in einem Toleranzbereich 56 um die projizierte untere Strichcodehöhenposition 53 liegt. Die neue geschätzte Strichcodehöhe 32 kann dann der Mittelwert sein aus der Balkenhöhe 12 des ersten Balkens 10 und der Balkenhöhe 22 des zweiten Balkens 20.

Auf diese Weise können bei dem (iterativen) Überprüfen die Strichcodehöhe 32 und die obere und untere Strichcodehöhenposition 31, 33 verfeinert und/oder verbessert werden. Es versteht sich, dass auch die geschätzte Position der Taktspur 34 (wie in Fig. 4 bis Fig. 6 gezeigt) anhand des Balkenhöheparameters 21, 22, 23 des zweiten Balkens 20 überprüft, insbesondere verfeinert und/oder verbessert, werden kann.

Zu dem ersten Balken 10 und zweiten Balken 20 kann anhand der relativen Ausschöpfung der geschätzten Strichcodehöhenpositionen 31, 33 bzw. der projizierten Strichcodehöhenpositionen 51, 53 an den Endpunkten 11, 12, 21, 23 des betreffenden Balkens 10, 20 ein Balkentyp zugewiesen werden. Zum Beispiel kann ein Abstand des oberen Endpunkts 21 und unteren Endpunkts 23 des zweiten Balkens 20 zu der projizierten oberen Strichcodehöhenposition 51 beziehungsweise der projizierten unteren Strichcodehöhenposition 53 bestimmt und der Balkentyp danach festgelegt, ob der bestimmte Abstand gleich oder kleiner als ein Abstandsgrenzwert ist. Für das in Fig. 4 dargestellte Beispiel eines Strichcodes kann unter Annahme eines Vierzustands-Strichcodetyps dem ersten Balken 10 der Balkentyp "Full Bar" und dem zweiten Balken 20 der Balkentyp "Tracker" zugewiesen werden. Für das in Fig. 5 dargestellte Beispiel eines Strichcodes kann unter Annahme eines Vierzustands-Strichcodetyps dem ersten Balken 10 der Balkentyp "Tracker" und dem zweiten Balken 20 der Balkentyp "Full Bar" zugewiesen werden. Für das in Fig. 6 dargestellte Beispiel eines Strichcodes kann unter Annahme eines Vierzustands-Strichcodetyps dem ersten und zweiten Balken 10, 20 der Balkentyp "Tracker" oder "Full Bar" zugewiesen werden, wobei "Full Bar" bevorzugt wird.

Generell kann der erste Balken 10 als Full Bar angenommen werden, da dies unter anderem den Vorteil mit sich bringt, dass Full Bars orientierungsneutral sind. Wird im weiteren Verlauf einem weiteren Balken ein bisher noch nicht zugewiesenen Balkentyp zugewiesen, kann die Zuweisung eines Balkentyps für die bisher erfassten Balken 10, 20 überprüft werden und gegebenenfalls rückwirkend angepasst werden. In anderen Worten kann ein sogenanntes "Backtracking" erfolgen.

Die erste Richtung 50 (wie in Fig. 3 gezeigt) kann anhand einer Balkenlängsrichtung des zweiten Balkens 20 (wie in Fig. 4 bis Fig. 6 dargestellt) überprüft, z.B. als Orthogonale zu der Balkenlängsrichtung des zweiten Balkens 20, angepasst und/oder neu bestimmt werden. Ausgehend von der Position des zweiten Balkens 20 in die überprüfte, insbesondere angepasste und/oder neu bestimmte, erste Richtung kann dann ein benachbarter dritter Balken gesucht werden. Für den weiteren Ablauf des iterativen Verfahrens stellt der dritte Balken dann gleichsam den zweiten Balken 20 und der zweite Balken 20 gleichsam den ersten Balken 10 dar.

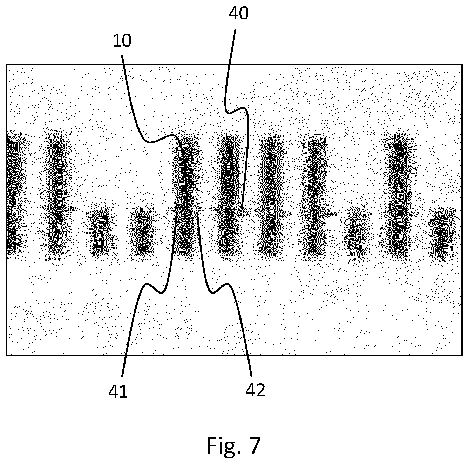

Fig. 7 zeigt eine bildliche Darstellung von Bilddaten über einen Strichcode und verdeutlicht, wie ein erster Balken des Strichcodes durch Vorverarbeiten der Bilddaten erfasst werden kann. Zunächst wird eine Position zumindest eines Punkts (nicht in Fig. 7 gezeigt) auf dem Strichcode und eine (grobe) Richtung des Strichcodes bestimmt. Der erste Balken 10 kann erfasst werden, indem die Bilddaten, insbesondere von Bildpunkt zu Bildpunkt, entlang einer anhand der bestimmten Position des Punkts auf dem Strichcode und der Richtung des Strichcodes festgelegten Linie (nicht in Fig. 7 gezeigt) abgetastet werden Kantenübergänge 40 können mittels eines Sobel-Filters als Hell-Dunkel- oder Dunkel-Hell-Übergänge entlang der Linie erkannt und deren jeweilige Position und Orientierung bestimmt werden. Der erste Balken 10 kann anhand eines aus den bestimmten Kantenübergängen ausgewählten ersten Paares aus entgegengesetzt zueinander orientierten Kantenübergängen 41, 42, d.h. ein Paar aus einem Hell-Dunkel-Übergang 41 gefolgt von einem Dunkel-Hell-Übergang 42, festgelegt werden. Die Position des ersten Balkens 10 kann dann beispielsweise als Mittelwert zwischen den beiden Kantenübergängen 41, 42 bestimmt werden.

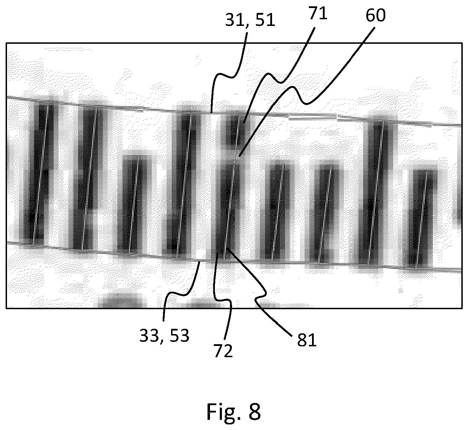

Fig. 8 zeigt eine bildliche Darstellung von Bilddaten über einen Strichcode und verdeutlicht, wie Bildfehler 60 in den Balken mit den hierin beschriebenen Vorgehensweisen bewältigt werden können. Die Bilddaten können Bildpunkte aufweisen, wobei die den Balken entsprechenden Bildpunkte einen Grauwert gleich oder kleiner als einen Grauwertgrenzwert oder einen Farbwert in einem Farbwertbereich aufweisen. Bei der Bestimmung des Balkenhöhenparameters 21, 22, 23 des zweiten Balkens 20, und auch bei der Bestimmung des Balkenhöhenparameters jedes weiteren Balkens, können Bildfehler 60 in dem betreffenden Balken 20 ignoriert werden, wenn festgestellt wird, dass Bildpunkte (und insbesondere zumindest eine bestimmte Anzahl an Bildpunkten) mit einem Grauwert gleich oder kleiner als der Grauwertgrenzwert oder mit einem Farbwert innerhalb des Farbwertbereichs in einem Bildbereich 71 oberhalb des Bildfehlers 60 und unterhalb oder bei der geschätzten, insbesondere projizierten, oberen Strichcodehöhenposition 31, 51 vorhanden sind und/oder dass Bildpunkte mit einem Grauwert gleich oder kleiner als der Grauwertgrenzwert oder mit einem Farbwert innerhalb des Farbwertbereichs in einem Bildbereich 72 unterhalb des Bildfehlers 60 und oberhalb oder bei der geschätzten, insbesondere projizierten, unteren Strichcodehöhenposition 33, 53 vorhanden sind.

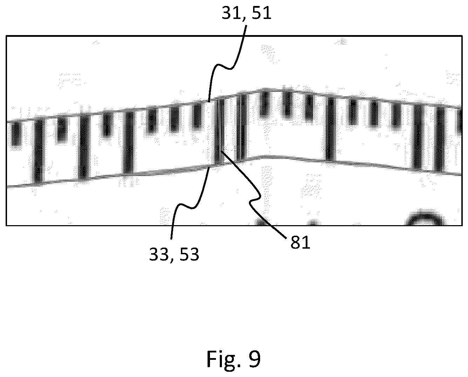

Fig. 9 zeigt eine bildliche Darstellung von Bilddaten über einen Strichcode und verdeutlicht als weiteres Beispiel, wie Wellungen und Verzerrungen des Strichcodes bewältigt werden können. In Fig. 8 und Fig. 9 sind Balkenlängsrichtungen der Balken als Linien eingezeichnet. Wie hierin beschrieben können nicht nur die geschätzten Strichcodehöhenpositionen 31, 33, sondern auch die Richtung für deren Projektion von Balken zu Balken iterativ überprüft werden. Insbesondere kann die Richtung für die Projektion iterativ z.B. als Orthogonale zu der Balkenlängsrichtung 81 des Ausgangsbalkens für die Projektion angepasst und/oder neu bestimmt werden. Auf diese Weise kann die Robustheit der hierin beschrieben Vorgehensweisen gegenüber Wellungen und Verzerrungen des Strichcodes erhöht werden.

In den Fig. 8 bis 13 sind sich überlagernde Projektionen von Strichcodehöhenpositionen 31, 33 zu erkennen, die aus einem Backtracking und der daraus resultierenden Neubestimmung der Strichcodehöhenpositionen 31, 33 stammen.

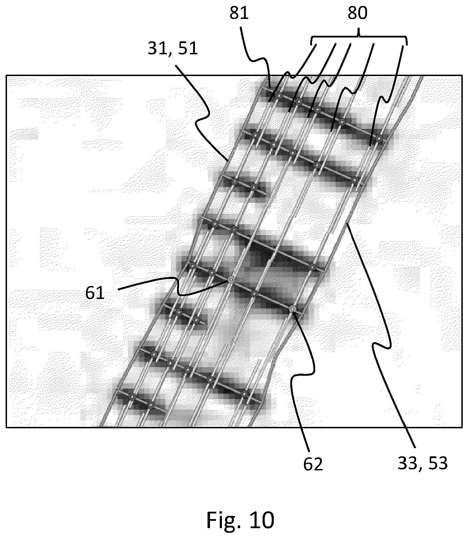

Fig. 10 zeigt eine bildliche Darstellung von Bilddaten über einen Strichcode und verdeutlicht, wie die Balken in dem Strichcode fortschreitend erfasst werden können. Zunächst wird eine Balkenbreite des ersten Balkens (nicht in Fig. 10 gezeigt) bestimmt und ein Balkenabstand anhand der Balkenbreite des ersten Balkens geschätzt. Für alle weiteren Balken kann der Balkenabstand anhand eines rollierenden Mittelwerts der vorherigen Balkenabstände geschätzt werden. Ausgehend von dem ersten Balken bzw. einem Ausgangsbalken werden fünf in Balkenlängsrichtung des ersten Balkens bzw. des Ausgangsbalkens verteilte Linien 80 abgetastet, bis zumindest ein zweites Paar aus entgegengesetzt zueinander orientierten Kantenübergangen erfasst wird und/oder bis ein auf dem geschätzten Balkenabstand basierender Abstandsgrenzwert erreicht ist. Die abgetasteten Linien 80 können orthogonal zu der Balkenlängsrichtung 81 des Ausgangsbalkens sein. Es versteht sich, dass auch weniger oder mehr als fünf Linien abgetastet werden können. Der Abstandsgrenzwert kann das doppelte des geschätzten Balkenabstands sein. Dabei können drei Linien in dem Bereich der geschätzten Position der Taktspur 34 und zwei Linien außerhalb des Bereichs der geschätzten Position der Taktspur 34 abgetastet werden. Für jede abgetastete Linie wird ein Mittelpunkt zwischen den Kantenübergängen der erfassten nächsten Paare aus entgegengesetzt zueinander orientierten Kantenübergangen bestimmt. Die bestimmten Mittelpunkte sind in Fig. 10 als Kreise eingezeichnet. Anhand von zumindest zwei bestimmten Mittelpunkten kann mittels linearer Regression die Balkenlängsrichtung eines erfassten benachbarten Balkens bestimmt werden. Mithilfe der bestimmten Balkenlängsrichtung können dann der obere und untere Endpunkt des benachbarten Balkens bestimmt werden. Wie in Fig. 10 gezeigt kann mithilfe linearer Regression, auch wenn der betreffende Balken bei den Mittelpunkten 61, 62 aufgrund von Verschmutzungen des Strichcodes nicht sicher erfasst werden konnte, der Balken, und insbesondere seine Endpunkte, trotzdem erfasst werden. Wenn keine zumindest zwei Mittelpunkte je Balken für die lineare Regression bestimmt werden können, kann die Balkenlängsrichtung des Ausgangsbalkens als die Balkenlängsrichtung des benachbarten Balkens festgelegt werden. Die geschätzte obere Strichcodehöhenposition 31,51 und untere Strichcodehöhenposition 33, 53 werden iterativ überprüft, wie für Fig. 4 bis Fig. 9 beschrieben, und von Balken zu Balken in eine iterativ überprüfte, insbesondere anhand der Balkenlängsrichtung des Ausgangsbalkens iterativ angepasste und/oder neu bestimmte, Richtung projiziert. Insbesondere kann die Balkenlängsrichtung aus mehreren vorherigen Balkenlängsrichtungen gebildet werden, z.B. als gleitender Durchschnitt. Die Zuweisung eines Balkentyps zu den Balken kann anhand der projizierten geschätzten Strichcodehöhenpositionen 31, 33, 51, 53 und der Endpunkte der Balken erfolgen.

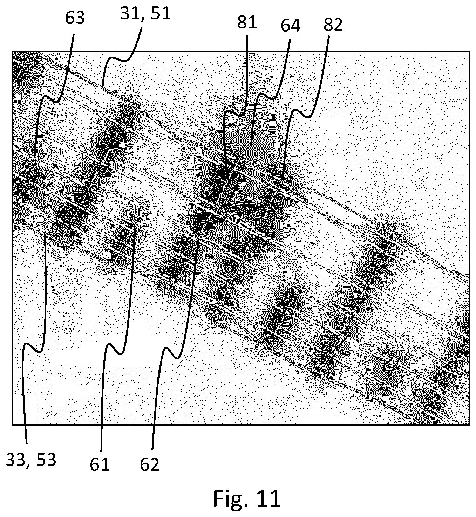

Fig. 11 zeigt eine bildliche Darstellung von Bilddaten über einen Strichcode und verdeutlicht als weiteres Beispiel, wie Verschmutzungen des Strichcodes mithilfe der insbesondere für Fig. 10 beschriebenen Vorgehensweise bewältigt werden können. Auch wenn die betreffenden Balken bei den Mittelpunkten 61, 62, 63 aufgrund von Verschmutzungen des Strichcodes nicht sicher erfasst werden konnten, können mittels der linearen Regression die betreffenden Balken, insbesondere deren Endpunkte, trotzdem erfasst werden. Insbesondere können, auch wenn wegen der starken Verschmutzung 64 im oberen Bereich des Strichcodes teilweise keine passenden Kantenübergänge und in der Folge keine Mittelpunkte gefunden werden konnten, mittels linearer Regression anhand der Mittelpunkte im unteren Bereich des Strichcodes die Balkenlängsrichtungen 81, 82 und in der Folge die Endpunkte der betreffenden Balken trotzdem bestimmt werden.

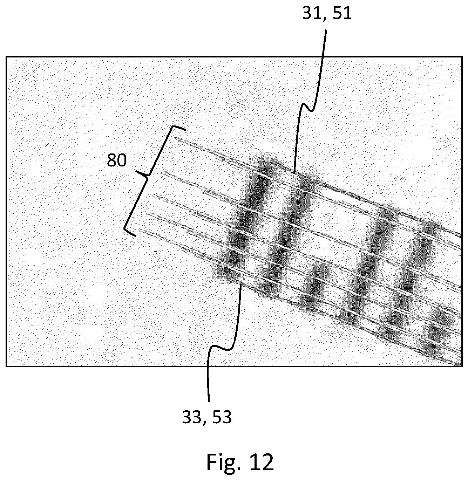

Fig. 12 zeigt eine bildliche Darstellung von Bilddaten über einen Strichcode und verdeutlicht, wie ein Ende des Strichcodes gefunden werden kann. Wird bei der Abtastung entlang der Linien 80 kein weiterer benachbarter Balken mehr erfasst, wird angenommen, dass ein Ende des Strichcodes erreicht ist.

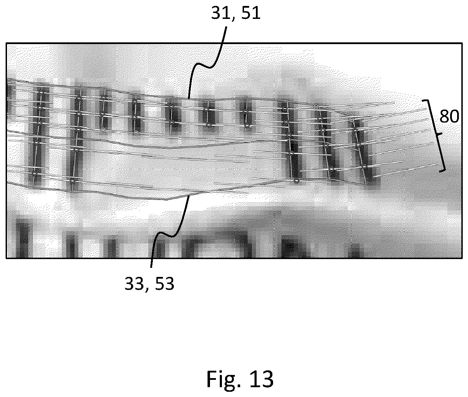

Fig. 13 zeigt eine bildliche Darstellung von Bilddaten über einen Strichcode und verdeutlicht als weiteres Beispiel, wie Wellungen und Verzerrungen des Strichcodes insbesondere mithilfe der für Fig. 10 bis Fig. 12 beschriebenen Vorgehensweisen bewältigt werden können. Benachbarte Balken werden mittels der iterativen Abtastung der Linien 80 erfasst. Die Zuweisung der Balkentypen erfolgt anhand der bestimmten Endpunkte der erfassten Balken und der projizierten geschätzten Strichcodehöhenpositionen 31, 33, 51, 53. Wird bei der Abtastung entlang der Linien 80 kein weiterer benachbarter Balken mehr erfasst, wird angenommen, dass ein Ende des Strichcodes erreicht ist.

## Patentansprüche

1. Verfahren zum Erkennen und/oder Auslesen von balkenhöhenpositionscodiertem Strichcode (30) aus Bilddaten über den Strichcode (30), umfassend Bestimmen zumindest eines Balkenhöhenparameters (11, 12, 13, 14) und einer Position eines ersten Balkens (10) einer Vielzahl an Balken des Strichcodes (30), wobei der Balkenhöhenparameter eine Balkenhöhe (12) und zumindest einen Endpunkt (11, 13) in Balkenlängsrichtung umfasst; Schätzen zumindest eines Strichcodehöhenparameters (31, 32, 33, 34, 51, 53) des Strichcodes (30) anhand des Balkenhöhenparameters (11, 12, 13, 14) des ersten Balkens (10),
**gekennzeichnet durch**
ausgehend von der Position des ersten Balkens (10) in eine erste Richtung (50), Bestimmen zumindest eines Balkenhöhenparameters (21, 22, 23) und einer Position eines benachbarten zweiten Balkens (20) der Vielzahl an Balken des Strichcodes (30);
Überprüfen des geschätzten Strichcodehöhenparameters (31, 32, 33, 34, 51, 53) anhand des Balkenhöhenparameters (21, 22, 23) des zweiten Balkens (20); und
Zuweisen eines Balkentyps zu jedem der Balken (10, 20) anhand des bestimmten Balkenhöhenparameters (11, 12, 13, 14, 21, 22, 23) des betreffenden Balkens (10, 20) und anhand des geschätzten Strichcodehöhenparameters (31, 32, 33, 34, 51, 53).

2. Verfahren nach Anspruch 1,
wobei ausgehend von der Position des zweiten Balkens (20) in die erste Richtung (50) ein Balkenhöhenparameter und eine Position eines zu dem zweiten Balken (20) benachbarten dritten Balkens der Vielzahl an Balken des Strichcodes (30) bestimmt wird.

3. Verfahren nach Anspruch 1 oder 2,
wobei sich die Balkentypen in einem oder mehreren der folgenden unterscheiden: in der Balkenhöhe (12, 22), in der Orientierung der Balken relativ zu der Position der Taktspur (34).

4. Verfahren nach einem der voranstehenden Ansprüche,
wobei bei einer Anpassung des geschätzten Strichcodehöhenparameters (31, 32, 33, 34, 51, 53) und/oder bei der Zuweisung eines bisher noch nicht zugewiesenen Balkentyps die Zuweisung eines Balkentyps für die bisher erfassten Balken (10, 20) überprüft wird.

5. Verfahren nach einem der voranstehenden Ansprüche,
wobei die geschätzte Position der Taktspur (34) fortschreitend anhand der bisher zugewiesenen Balkentypen überprüft wird.

6. Verfahren nach einem der voranstehenden Ansprüche, wobei der geschätzte Strichcodehöhenparameter (31, 32, 33, 34, 51, 53) bei dem Überprüfen anhand des Balkenhöhenparameters (21, 22, 23) des zweiten Balkens (20) verbessert wird; und
wobei bei dem Überprüfen des geschätzten Strichcodehöhenparameters (31, 32, 33, 34, 51, 53) einer der folgenden Schritte ausgeführt wird:
der geschätzte Strichcodehöhenparameter (31, 32, 33, 34, 51, 53) wird bestätigt, wenn der Balkenhöhenparameter (21, 22, 23) des zweiten Balkens (20) unter Berücksichtigung eines Toleranzbereichs (54, 56) niedriger liegt als der geschätzte Strichcodehöhenparameter (31, 32, 33, 34, 51, 53), oder
der Strichcodehöhenparameter (31, 32, 33, 34, 51, 53) wird allein anhand des Balkenhöhenparameters (21, 22, 23) des zweiten Balkens (20) neu geschätzt, wenn der Balkenhöhenparameter (21, 22, 23) des zweiten Balkens (20) unter Berücksichtigung des Toleranzbereichs (54, 56) höher liegt ist als der geschätzte Strichcodehöhenparameter (31, 32, 33, 34, 51, 53), oder
der Strichcodehöhenparameter (31, 32, 33, 34, 51, 53) wird anhand des Balkenhöhenparameters (11, 12, 23) des ersten Balkens (10) und anhand des Balkenhöhenparameters (21, 22, 23) des zweiten Balkens (20) neu geschätzt, wenn der Balkenhöhenparameter (21, 22, 23) des zweiten Balkens (20) unter Berücksichtigung des Toleranzbereichs (54, 56) bei dem geschätzten Strichcodehöhenparameter (31, 32, 33, 34, 51, 53) liegt.

7. Verfahren nach einem der voranstehenden Ansprüche, ferner umfassend Vorverarbeiten der Bilddaten, um eine Position zumindest eines Punkts auf dem Strichcode (30) und eine Richtung des Strichcodes (30) zu bestimmen, wobei der erste Balken (10) erfasst wird, indem
die Bilddaten entlang einer anhand der bestimmten Position des Punkts auf dem Strichcode (30) und der Richtung des Strichcodes (30) festgelegten Linie abgetastet werden,
Kantenübergänge (40) entlang der Linie erkannt und deren jeweilige Position und Orientierung bestimmt werden, und
der erste Balken (10) anhand eines aus den bestimmten Kantenübergängen (40) ausgewählten ersten Paares aus entgegengesetzt zueinander orientierten Kantenübergängen (41, 42) festgelegt wird.

8. Verfahren nach einem der voranstehenden Ansprüche, wobei die Position der Taktspur (34) in Balkenlängsrichtung in der Mitte der Balken (10, 20) angenommen wird oder an einem der beiden Enden der Balken (10, 20).

9. Verfahren nach einem der voranstehenden Ansprüche,
wobei die Bilddaten Bildpunkte aufweisen, wobei die den Balken (10, 20) entsprechenden Bildpunkte einen Grauwert gleich oder kleiner als einen Grauwertgrenzwert oder einen Farbwert in einem Farbwertbereich aufweisen, wobei der Strichcodehöhenparameter eine obere Strichcodehöhenposition oder eine untere Strichcodehöhenposition umfasst;
wobei bei der Bestimmung des Balkenhöhenparameters (21, 22, 23) des zweiten Balkens (20) Bildfehler in dem betreffenden Balken ignoriert werden, wenn festgestellt wird,
dass Bildpunkte mit einem Grauwert gleich oder kleiner als der Grauwertgrenzwert oder mit einem Farbwert innerhalb des Farbwertbereichs in einem Bildbereich (71) oberhalb des Bildfehlers (60) und unterhalb oder bei der geschätzten oberen Strichcodehöhenposition (31, 51) vorhanden sind, oder
dass Bildpunkte mit einem Grauwert gleich oder kleiner als der Grauwertgrenzwert oder mit einem Farbwert innerhalb des Farbwertbereichs in einem Bildbereich (72) unterhalb des Bildfehlers (60) und oberhalb oder bei der geschätzten unteren Strichcodehöhenposition (33, 53) vorhanden sind.

10. Verfahren nach einem der voranstehenden Ansprüche,
wobei der Strichcodehöhenparameter eine obere Strichcodehöhenposition und eine untere Strichcodehöhenposition umfasst und wobei die geschätzte obere (31, 51) und untere Strichcodehöhenposition (33, 53) von dem ersten Balken (10) in die erste Richtung (50) projiziert wird; und
wobei der Balkenhöhenparameter (21, 22, 23) des zweiten Balkens (20) einen oberen (21) und einen unteren Endpunkt (23) in Balkenlängsrichtung umfasst;
wobei bei der Überprüfung des geschätzten Strichcodehöhenparameters (31, 32, 33, 34, 51, 53) einer der folgenden Schritte durchgeführt wird:
die geschätzte obere (31, 51) und untere Strichcodehöhenposition (33, 53) wird bestätigt, wenn der obere Endpunkt (21) des zweiten Balkens (20) niedriger liegt als die projizierte obere Strichcodehöhenposition (31, 51) und/oder wenn der untere Endpunkt (23) des zweiten Balkens (20) höher liegt als die projizierte untere Strichcodehöhenposition (33, 53); oder
die obere (31, 51) und untere Strichcodehöhenposition (33, 53) wird allein anhand des oberen (21) beziehungsweise unteren Endpunkts (23) des zweiten Balkens (20) neu geschätzt, wenn der obere Endpunkt (21) des zweiten Balkens (20) höher liegt als die projizierte obere Strichcodehöhenposition (31, 51) beziehungsweise wenn der untere Endpunkt (23) des zweiten Balkens (20) niedriger liegt als die projizierte untere Strichcodehöhenposition (33, 53); oder
die obere (31, 51) und untere Strichcodehöhenposition (33, 53) wird anhand des oberen Endpunkts (11) des ersten Balkens (10) und anhand des oberen Endpunkts (21) des zweiten Balkens (20) beziehungsweise anhand des unteren Endpunkts (13) des ersten Balkens (10) und anhand des unteren Endpunkts (23) des zweiten Balkens (20) neu geschätzt, wenn der obere Endpunkt (21) des zweiten Balkens (20) in einem Toleranzbereich (54) um die projizierte obere Strichcodehöhenposition (31, 51) beziehungsweise wenn der untere Endpunkt (23) des zweiten Balkens (20) in einem Toleranzbereich (56) um die projizierte untere Strichcodehöhenposition (33, 53) liegt.

11. Verfahren nach einem der voranstehenden Ansprüche,
wobei eine Balkenbreite des ersten Balkens (10) bestimmt wird; und
wobei der zweite Balken (20) erfasst wird, indem ein Balkenabstand anhand der Balkenbreite des ersten Balkens (10) geschätzt wird und zumindest eine Linie (80) parallel zu der ersten Richtung (50) oder eine Linie orthogonal zu der Balkenlängsrichtung (14) des ersten Balkens (10) abgetastet wird, bis zumindest ein zweites Paar aus entgegengesetzt zueinander orientierten Kantenübergangen erfasst wird oder bis ein auf dem geschätzten Balkenabstand basierender Abstandsgrenzwert erreicht ist.

12. Verfahren nach Anspruch 11,
wobei zumindest eine Linie in einem Bereich der geschätzten Position der Taktspur (34) und zumindest eine Linie außerhalb des Bereichs der geschätzten Position der Taktspur (34) abgetastet wird;
wobei für jede abgetastete Linie (80) ein Mittelpunkt zwischen den Kantenübergängen der erfassten nächsten Paare aus entgegengesetzt zueinander orientierten Kantenübergangen bestimmt wird, wobei die bestimmten Mittelpunkte in Gruppen gruppiert werden und nur diejenige Gruppe, welche dem geschätzten Balkenabstand am nächsten liegt, für die Erfassung des zweiten Balkens (20) verwendet wird, wobei anhand von zumindest zwei bestimmten Mittelpunkten mittels linearer Regression die Balkenlängsrichtung des zweiten Balkens (20) bestimmt wird oder die Balkenlängsrichtung (14) des ersten Balkens (10) als die Balkenlängsrichtung des zweiten Balkens (20) festgelegt wird, wobei mithilfe der Balkenlängsrichtung des zweiten Balkens (20) der obere (21) und untere Endpunkt (23) des zweiten Balkens (20) bestimmt wird und wobei für die nachfolgende Erfassung des zu dem zweiten Balken (20) benachbarten dritten Balkens die geschätzte obere (31, 51) und untere Strichcodehöhenposition (33, 53) von dem zweiten Balken (20) in eine Richtung orthogonal zu der Balkenlängsrichtung (81) des zweiten Balkens (20) projiziert wird.

13. Verfahren nach einem der voranstehenden Ansprüche,
wobei der zweite Balken (20) verifiziert wird, indem geprüft wird, ob oberhalb des oberen Endpunkts (21) des zweiten Balkens (20) oder unterhalb des unteren Endpunkts (23) des zweiten Balkens (20) Bildpunkte vorhanden sind, welche einen Grauwert oberhalb eines Grauwertgrenzwertes oder einen Farbwert außerhalb eines Farbwertbereichs aufweisen oder ob ein Kontrast eines Grauwerts oder Farbwerts des zweiten Balkens (20) zu dem Grauwert oder Farbwert der Bildpunkte oberhalb und/oder unterhalb des oberen (21) beziehungsweise unteren Endpunkts (23) gleich oder größer als ein Kontrastgrenzwert ist.

14. Verfahren nach einem der voranstehenden Ansprüche, umfassend Wiederholen des Bestimmens eines Balkenhöhenparameters eines benachbarten Balkens und Wiederholen des Überprüfens des Strichcodehöhenparameters in die erste Richtung (50) und in eine der ersten Richtung (50) entgegengesetzte zweite Richtung bis alle Balken (10, 20) der Vielzahl an Balken erfasst worden sind; und
Zuweisen eines Balkentyps zu jedem der Balken (10, 20) der Vielzahl an Balken anhand des bestimmten Balkenhöhenparameters des betreffenden Balkens und anhand des geschätzten Strichcodehöhenparameters (31, 32, 33, 34, 51, 53), wobei für die Zuweisung eines Balkentyps zu dem betreffenden Balken (10, 20) ein Abstand eines oberen (11, 21) oder unteren Endpunkts (13, 23) des betreffenden Balkens (10, 20) zu der geschätzten oberen (31, 51) beziehungsweise unteren Strichcodehöhenposition (33, 53) bestimmt wird und der Balkentyp danach festgelegt wird, ob der bestimmte Abstand gleich oder kleiner als ein Abstandsgrenzwert ist, wobei der Abstandsgrenzwert unter Annahme eines Strichcodetyps festgelegt ist, wobei die Zuweisung der Balkentypen zu den Balken (10, 20) auf Plausibilität geprüft wird, wobei bei einer Verneinung der Plausibilität die Zuweisung der Balkentypen zu den Balken (10 20) unter Annahme eines anderen Strichcodetyps überprüft wird.

15. System zum Erkennen und/oder Auslesen von balkenhöhenpositionscodiertem Strichcode (30) aus Bilddaten über den Strichcode (30), umfassend eine Kamera, welche ausgebildet ist, Bilddaten über den Strichcode (30), aufzunehmen; und
eine Verarbeitungsvorrichtung, welche ausgebildet ist, anhand der Bilddaten über den Strichcode (30)
zumindest einen Balkenhöhenparameter (11, 12, 13, 14) und eine Position eines ersten Balkens (10) einer Vielzahl an Balken des Strichcodes (30) zu bestimmen,
zumindest einen Strichcodehöhenparameter (31, 32, 33, 34, 51, 53) des Strichcodes (30) anhand des Balkenhöhenparameters (11, 12, 13, 14) des ersten Balkens (10) zu schätzen,
**dadurch gekennzeichnet, dass** die Verarbeitungsvorrichtung ausgebildet ist, anhand der Bilddaten über den Strichcode (30)
ausgehend von der Position des ersten Balkens (10) in eine erste Richtung (50), zumindest einen Balkenhöhenparameter (21, 22, 23) und eine Position eines benachbarten zweiten Balkens (20) der Vielzahl an Balken des Strichcodes (30) zu bestimmen;
den geschätzten Strichcodehöhenparameter (31, 32, 33, 34, 51, 53) anhand des Balkenhöheparameters (21, 22, 23) des zweiten Balkens (20) zu überprüfen; und
einen Balkentyp zu jedem der Balken (10, 20) anhand des bestimmten Balkenhöhenparameters (11, 12, 13, 14, 21, 22, 23) des betreffenden Balkens und anhand des geschätzten Strichcodehöhenparameters (31, 32, 33, 34, 51, 53) zuzuweisen.

## Claims

1. A method for recognizing and/or reading a bar height position-encoded barcode (30) from image data about the barcode (30), comprising determining at least one bar height parameter (11, 12, 13, 14) and a position of a first bar (10) of a plurality of bars of the barcode (30), wherein the bar height parameter comprises a bar height (12) and at least one end point (11, 13) in the longitudinal bar direction;
estimating at least one barcode height parameter (31, 32, 33, 34, 51, 53) of the barcode (30) based on the bar height parameter (11, 12, 13, 14) of the first bar (10),
**characterized by**,
starting from the position of the first bar (10) in a first direction (50), determining at least one bar height parameter (21, 22, 23) and a position of an adjacent second bar (20) of the plurality of bars of the barcode (30); checking the estimated barcode height parameter (31, 32, 33, 34, 51, 53) based on the bar height parameter (21, 22, 23) of the second bar (20); and assigning a bar type to each of the bars (10, 20) based on the determined bar height parameter (11, 12, 13, 14, 21, 22, 23) of the respective bar (10, 20) and based on the estimated barcode height parameter (31, 32, 33, 34, 51, 53).

2. A method according to claim 1,
wherein, starting from the position of the second bar (20) in the first direction (50), a bar height parameter and a position of a third bar of the plurality of bars of the barcode (30) are determined, said third bar being adjacent to the second bar (20).

3. A method according to claim 1 or 2,
wherein the bar types differ in one or more of the following: in the bar height (12, 22); in the orientation of the bars relative to the position of the clock track (34).

4. A method according to any one of the preceding claims,
wherein, on an adjustment of the estimated barcode height parameter (31, 32, 33, 34, 51, 53) and/or on the assignment of a bar type which has not yet been assigned, the assignment of a bar type for the previously detected bars (10, 20) is checked.

5. A method according to any one of the preceding claims,
wherein the estimated position of the clock track (34) is progressively checked based on the previously assigned bar types.

6. A method according to any one of the preceding claims, wherein the estimated barcode height parameter (31, 32, 33, 34, 51, 53) is improved during the checking based on the bar height parameter (21, 22, 23) of the second bar (20); and
wherein, during the checking of the estimated barcode height parameter (31, 32, 33, 34, 51, 53), one of the following steps is performed:
the estimated barcode height parameter (31, 32, 33, 34, 51, 53) is confirmed if the bar height parameter (21, 22, 23) of the second bar (20) is lower than the estimated barcode height parameter (31, 32, 33, 34, 51, 53), taking into account a tolerance range (54, 56), or the barcode height parameter (31, 32, 33, 34, 51, 53) is re-estimated solely based on the bar height parameter (21, 22, 23) of the second bar (20) if the bar height parameter (21, 22, 23) of the second bar (20) is higher than the estimated barcode height parameter (31, 32, 33, 34, 51, 53), taking into account the tolerance range (54, 56), or the barcode height parameter (31, 32, 33, 34, 51, 53) is re-estimated based on the bar height parameter (11, 12, 23) of the first bar (10) and based on the bar height parameter (21, 22, 23) of the second bar (20) if the bar height parameter (21, 22, 23) of the second bar (20) lies at the estimated barcode height parameter (31, 32, 33, 34, 51, 53), taking into account the tolerance range (54, 56).

7. A method according to any one of the preceding claims, further comprising preprocessing the image data to determine a position of at least one point on the barcode (30) and a direction of the barcode (30), wherein the first bar (10) is detected by
scanning the image data along a line which is defined based on the determined position of the point on the barcode (30) and the direction of the barcode (30),
recognizing edge transitions (40) along the line and determining their respective position and orientation, and
defining the first bar (10) based on a first pair of edge transitions (41, 42) oriented oppositely to one another, said first pair being selected from the determined edge transitions (40).

8. A method according to any one of the preceding claims, wherein the position of the clock track (34) in the longitudinal bar direction is assumed to be in the middle of the bars (10, 20) or at one of the two ends of the bars (10, 20).

9. A method according to any one of the preceding claims,
wherein the image data have pixels, wherein the pixels corresponding to the bars (10, 20) have a gray value equal to or less than a gray value limit value or a color value in a color value range, wherein the barcode height parameter comprises an upper barcode height position and a lower barcode height position;
wherein, during the determination of the bar height parameter (21, 22, 23) of the second bar (20), image errors in the respective bar are ignored when it is found
that pixels with a gray value equal to or less than the gray value limit value or with a color value within the color value range are present in an image region (71) above the image error (60) and below or at the estimated upper barcode height position (31, 51), or
that pixels with a gray value equal to or less than the gray value limit value or with a color value within the color value range are present in an image region (72) below the image error (60) and above or at the estimated lower barcode height position (33, 53).

10. A method according to any one of the preceding claims,
wherein the barcode height parameter comprises an upper barcode height position and a lower barcode height position and wherein the estimated upper (31, 51) and lower barcode height position (33, 53) are projected from the first bar (10) in the first direction (50); and
wherein the bar height parameter (21, 22, 23) of the second bar (20) comprises an upper (21) and a lower end point (23) in the longitudinal bar direction;
wherein, during the checking of the estimated barcode height parameter (31, 32, 33, 34, 51, 53), one of the following steps is performed:
the estimated upper (31, 51) and lower barcode height position (33, 53) are confirmed if the upper end point (21) of the second bar (20) is lower than the projected upper barcode height position (31, 51) and/or if the lower end point (23) of the second bar (20) is higher than the projected lower barcode height position (33, 53); or
the upper (31, 51) and lower barcode height position (33, 53) are re-estimated solely based on the upper (21) or lower end point (23) of the second bar (20) if the upper end point (21) of the second bar (20) is higher than the projected upper barcode height position (31, 51) or if the lower end point (23) of the second bar (20) is lower than the projected lower barcode height position (33, 53); or
the upper (31, 51) and lower barcode height position (33, 53) are re-estimated based on the upper end point (11) of the first bar (10) and based on the upper end point (21) of the second bar (20) or based on the lower end point (13) of the first bar (10) and based on the lower end point (23) of the second bar (20) if the upper end point (21) of the second bar (20) lies in a tolerance range (54) around the projected upper barcode height position (31, 51) or if the lower end point (23) of the second bar (20) lies in a tolerance range (56) around the projected lower barcode height position (33, 53).

11. A method according to any one of the preceding claims,
wherein a bar width of the first bar (10) is determined; and
wherein the second bar (20) is detected by estimating a bar spacing based on the bar width of the first bar (10) and scanning at least one line (80) parallel to the first direction (50) or a line orthogonally to the longitudinal bar direction (14) of the first bar (10) until at least a second pair of edge transitions oriented oppositely to one another is detected or until a spacing limit value based on the estimated bar spacing is reached.

12. A method according to claim 11,
wherein at least one line is scanned in a region of the estimated position of the clock track (34) and at least one line is scanned outside the region of the estimated position of the clock track (34);
wherein, for each scanned line (80), a center between the edge transitions of the detected nearest pairs of edge transitions oriented oppositely to one another is determined, wherein the determined centers are grouped into groups and only that group which is closest to the estimated bar spacing is used for the detection of the second bar (20), wherein the longitudinal bar direction of the second bar (20) is determined based on at least two determined centers by means of a linear regression or the longitudinal bar direction (14) of the first bar (10) is defined as the longitudinal bar direction of the second bar (20), wherein the upper (21) and lower end point (23) of the second bar (20) are determined with the aid of the longitudinal bar direction of the second bar (20) and wherein, for the subsequent detection of the third bar which is adjacent to the second bar (20), the estimated upper (31, 51) and lower barcode height position (33, 53) of the second bar (20) are projected in a direction orthogonal to the longitudinal bar direction (81) of the second bar (20).

13. A method according to any one of the preceding claims,
wherein the second bar (20) is verified by checking whether there are pixels above the upper end point (21) of the second bar (20) or below the lower end point (23) of the second bar (20) that have a gray value above a gray value limit value or a color value outside a color value range or whether a contrast of a gray value or color value of the second bar (20) to the gray value or color value of the pixels above and/or below the upper (21) or lower end point (23) is equal to or greater than a contrast limit value.

14. A method according to any one of the preceding claims, comprising repeating the determination of a bar height parameter of an adjacent bar and repeating the checking of the barcode height parameter in the first direction (50) and in a second direction opposite the first direction (50) until all the bars (10, 20) of the plurality of bars have been detected; and assigning a bar type to each of the bars (10, 20) of the plurality of bars based on the determined bar height parameter of the respective bar and based on the estimated barcode height parameter (31, 32, 33, 34, 51, 53), wherein, for the assignment of a bar type to the respective bar (10, 20), a spacing of an upper (11, 21) or lower end point (13, 23) of the respective bar (10, 20) from the estimated upper (31, 51) or lower barcode height position (33, 53) is determined and the bar type is then defined according to whether the determined spacing is equal to or less than a spacing limit value, wherein the spacing limit value is defined assuming a barcode type, wherein the assignment of the bar types to the bars (10, 20) is checked for plausibility, wherein, if the plausibility is negated, the assignment of the bar types to the bars (10, 20) is checked assuming a different barcode type.

15. A system for recognizing and/or reading a bar height position-encoded barcode (30) from image data about the barcode (30), said system comprising
a camera which is configured to record image data about the barcode (30), and
a processing apparatus which is configured, based on the image data about the barcode (30),
to determine at least one bar height parameter (11, 12, 13, 14) and a position of a first bar (10) of a plurality of bars of the barcode (30);
to estimate at least one barcode height parameter (31, 32, 33, 34, 51, 53) of the barcode (30) based on the bar height parameter (11, 12, 13, 14) of the first bar (10),
**characterized in that** the processing apparatus is configured, based on the image data about the barcode (30),
to determine, starting from the position of the first bar (10) in a first direction (50), at least one bar height parameter (21, 22, 23) and a position of an adjacent second bar (20) of the plurality of bars of the barcode (30);
to check the estimated barcode height parameter (31, 32, 33, 34, 51, 53) based on the bar height parameter (21, 22, 23) of the second bar (20); and
to assign a bar type to each of the bars (10, 20) based on the determined bar height parameter (11, 12, 13, 14, 21, 22, 23) of the respective bar and based on the estimated barcode height parameter (31, 32, 33, 34, 51, 53).

## Revendications

1. Procédé de détection et/ou de lecture d'un code-barres codé en hauteur et en position de barre (30) à partir de données d'image relatives au code-barres (30), comprenant
la détermination d'au moins un paramètre de hauteur de barre (11, 12, 13, 14) et d'une position d'une première barre (10) d'une pluralité de barres du code-barres (30), dans lequel le paramètre de hauteur de barre comprend une hauteur de barre (12) et au moins un point d'extrémité (11, 13) dans la direction longitudinale de la barre;
l'estimation d'au moins un paramètre de hauteur de code-barres (31, 32, 33, 34, 51, 53) du code-barres (30) sur la base du paramètre de hauteur de barre (11, 12, 13, 14) de la première barre (10),
**caractérisé par**
à partir de la position de la première barre (10) dans une première direction (50), la détermination d'au moins un paramètre de hauteur de barre (21, 22, 23) et d'une position d'une deuxième barre adjacente (20) de la pluralité de barres du code-barres (30);
la vérification du paramètre de hauteur de code-barres estimé (31, 32, 33, 34, 51, 53) sur la base du paramètre de hauteur de barre (21, 22, 23) de la deuxième barre (20); et
l'attribution d'un type de barre à chacune des barres (10, 20) sur la base du paramètre de hauteur de barre déterminé (11, 12, 13, 14, 21, 22, 23) de la barre respective (10, 20) et sur la base du paramètre de hauteur de code-barres estimé (31, 32, 33, 34, 51, 53).

2. Procédé selon la revendication 1,
dans lequel, à partir de la position de la deuxième barre (20) dans la première direction (50), un paramètre de hauteur de barre et une position d'une troisième barre de la pluralité de barres du code-barres (30), adjacente à la deuxième barre (20), sont déterminés.

3. Procédé selon la revendication 1 ou 2,
dans lequel les types de barres se distinguent par un ou plusieurs des éléments suivants : par la hauteur de barre (12, 22), par l'orientation des barres par rapport à la position de la piste de synchronisation (34).

4. Procédé selon l'une des revendications précédentes,
dans lequel, lors d'une adaptation du paramètre de hauteur de code-barres estimé (31, 32, 33, 34, 51, 53) et/ou lors de l'attribution d'un type de barre qui n'a pas encore été attribué, l'attribution d'un type de barre pour les barres (10, 20) détectées jusqu'alors est vérifiée.

5. Procédé selon l'une des revendications précédentes,
dans lequel la position estimée de la piste de synchronisation (34) est vérifiée progressivement sur la base des types de barres attribués jusqu'alors.

6. Procédé selon l'une des revendications précédentes, dans lequel le paramètre de hauteur de code-barres estimé (31, 32, 33, 34, 51, 53) est amélioré lors de la vérification sur la base du paramètre de hauteur de barre (21, 22, 23) de la deuxième barre (20); et
dans lequel, lors de la vérification du paramètre de hauteur de code-barres estimé (31, 32, 33, 34, 51, 53), l'une des étapes suivantes est exécutée:
le paramètre de hauteur de code-barres estimé (31, 32, 33, 34, 51, 53) est confirmé lorsque le paramètre de hauteur de barre (21, 22, 23) de la deuxième barre (20), en tenant compte d'une plage de tolérance (54, 56), est situé plus bas que le paramètre de hauteur de code-barres estimé (31, 32, 33, 34, 51, 53), ou
le paramètre de hauteur de code-barres (31, 32, 33, 34, 51, 53) est réestimé uniquement sur la base du paramètre de hauteur de barre (21, 22, 23) de la deuxième barre (20) lorsque le paramètre de hauteur de barre (21, 22, 23) de la deuxième barre (20), en tenant compte de la plage de tolérance (54, 56), est situé plus haut que le paramètre de hauteur de code-barres estimé (31, 32, 33, 34, 51, 53), ou
le paramètre de hauteur de code-barres (31, 32, 33, 34, 51, 53) est réestimé sur la base du paramètre de hauteur de barre (11, 12, 23) de la première barre (10) et sur la base du paramètre de hauteur de barre (21, 22, 23) de la deuxième barre (20) lorsque le paramètre de hauteur de barre (21, 22, 23) de la deuxième barre (20), en tenant compte de la plage de tolérance (54, 56), se situe au niveau du paramètre de hauteur de code-barres estimé (31, 32, 33, 34, 51, 53).

7. Procédé selon l'une des revendications précédentes, comprenant en outre le prétraitement des données d'image afin de déterminer une position d'au moins un point sur le code-barres (30) et une direction du code-barres (30), dans lequel la première barre (10) est détectée en
balayant les données d'image le long d'une ligne définie sur la base de la position déterminée du point sur le code-barres (30) et de la direction du code-barres (30),
détectant des transitions de bord (40) le long de la ligne et déterminant leur position et leur orientation respectives, et
définissant la première barre (10) sur la base d'une première paire sélectionnée parmi les transitions de bord déterminées (40), les transitions de bord (41, 42) de la première paire étant orientées en opposition l'une par rapport à l'autre.

8. Procédé selon l'une des revendications précédentes, dans lequel la position de la piste de synchronisation (34) dans la direction longitudinale des barres est supposée se trouver au milieu des barres (10, 20) ou à l'une des deux extrémités des barres (10, 20).

9. Procédé selon l'une des revendications précédentes,
dans lequel les données d'image présentent des pixels, dans lequel les pixels correspondant aux barres (10, 20) présentent une valeur de gris égale ou inférieure à un seuil de valeur de gris ou une valeur de couleur dans une plage de valeurs de couleur, dans lequel le paramètre de hauteur de code-barres comprend une position de hauteur de code-barres supérieure ou une position de hauteur de code-barres inférieure;
dans lequel, lors de la détermination du paramètre de hauteur de barre (21, 22, 23) de la deuxième barre (20), des erreurs d'image dans la barre respective sont ignorées lorsqu'il est déterminé
que des pixels présentant une valeur de gris égale ou inférieure au seuil de valeur de gris ou présentant une valeur de couleur à l'intérieur de la plage de valeurs de couleur sont présents dans une zone d'image (71) au-dessus de l'erreur d'image (60) et au-dessous de ou au niveau de la position de hauteur de code-barres supérieure estimée (31, 51), ou
que des pixels présentant une valeur de gris égale ou inférieure au seuil de valeur de gris ou présentant une valeur de couleur à l'intérieur de la plage de valeurs de couleur sont présents dans une zone d'image (72) au-dessous de l'erreur d'image (60) et au-dessus de ou au niveau de la position de hauteur de code-barres inférieure estimée (33, 53).

10. Procédé selon l'une des revendications précédentes,
dans lequel le paramètre de hauteur de code-barres comprend une position de hauteur de code-barres supérieure et une position de hauteur de code-barres inférieure et dans lequel la position de hauteur de code-barres supérieure (31, 51) et inférieure estimée (33, 53) est projetée depuis la première barre (10) dans la première direction (50); et
dans lequel le paramètre de hauteur de barre (21, 22, 23) de la deuxième barre (20) comprend un point d'extrémité supérieur (21) et un point d'extrémité inférieur (23) dans la direction longitudinale de la barre;
dans lequel, lors de la vérification du paramètre de hauteur de code-barres estimé (31, 32, 33, 34, 51, 53), l'une des étapes suivantes est exécutée:
la position de hauteur de code-barres supérieure (31, 51) et inférieure estimée (33, 53) est confirmée lorsque le point d'extrémité supérieur (21) de la deuxième barre (20) est situé plus bas que la position de hauteur de code-barres supérieure projetée (31, 51) et/ou lorsque le point d'extrémité inférieur (23) de la deuxième barre (20) est situé plus haut que la position de hauteur de code-barres inférieure projetée (33, 53); ou
la position de hauteur de code-barres supérieure (31, 51) et inférieure (33, 53) est réestimée uniquement sur la base du point d'extrémité supérieur (21) et respectivement inférieur (23) de la deuxième barre (20), lorsque le point d'extrémité supérieur (21) de la deuxième barre (20) est situé plus haut que la position de hauteur de code-barres supérieure projetée (31, 51) et respectivement lorsque le point d'extrémité inférieur (23) de la deuxième barre (20) est situé plus bas que la position de hauteur de code-barres inférieure projetée (33, 53); ou
la position de hauteur de code-barres supérieure (31, 51) et inférieure (33, 53) est réestimée sur la base du point d'extrémité supérieur (11) de la première barre (10) et sur la base du point d'extrémité supérieur (21) de la deuxième barre (20), respectivement sur la base du point d'extrémité inférieur (13) de la première barre (10) et sur la base du point d'extrémité inférieur (23) de la deuxième barre (20), lorsque le point d'extrémité supérieur (21) de la deuxième barre (20) se situe dans une plage de tolérance (54) autour de la position de hauteur de code-barres supérieure projetée (31, 51), respectivement lorsque le point d'extrémité inférieur (23) de la deuxième barre (20) se situe dans une plage de tolérance (56) autour de la position de hauteur de code-barres inférieure projetée (33, 53).

11. Procédé selon l'une des revendications précédentes,
dans lequel une largeur de barre de la première barre (10) est déterminée; et
dans lequel la deuxième barre (20) est détectée en estimant un espacement entre barres sur la base de la largeur de barre de la première barre (10) et en balayant au moins une ligne (80) parallèle à la première direction (50) ou une ligne orthogonale à la direction longitudinale de la barre (14) de la première barre (10), jusqu'à ce qu'au moins une deuxième paire de transitions de bord orientées en opposition l'une par rapport à l'autre soit détectée ou jusqu'à ce qu'un seuil de distance basé sur l'espacement entre barres estimé soit atteint.

12. Procédé selon la revendication 11,
dans lequel au moins une ligne dans une zone de la position estimée de la piste de synchronisation (34) et au moins une ligne à l'extérieur de la zone de la position estimée de la piste de synchronisation (34) sont balayées;
dans lequel, pour chaque ligne balayée (80), un point central entre les transitions de bord des paires suivantes détectées de transitions de bord orientées en opposition l'une par rapport à l'autre est déterminé, dans lequel les points centraux déterminés sont regroupés en groupes et seul le groupe qui est le plus proche de l'espacement entre barres estimé est utilisé pour la détection de la deuxième barre (20), dans lequel la direction longitudinale de la deuxième barre (20) est déterminée au moyen d'une régression linéaire à l'aide d'au moins deux points centraux déterminés ou la direction longitudinale (14) de la première barre (10) est définie comme étant la direction longitudinale de la deuxième barre (20), dans lequel le point d'extrémité supérieur (21) et le point d'extrémité inférieur (23) de la deuxième barre (20) sont déterminés à l'aide de la direction longitudinale de la deuxième barre (20) et dans lequel, pour la détection ultérieure de la troisième barre adjacente à la deuxième barre (20), la position de hauteur de code-barres supérieure (31, 51) et inférieure estimée (33, 53) est projetée depuis la deuxième barre (20) dans une direction orthogonale à la direction longitudinale (81) de la deuxième barre (20).

13. Procédé selon l'une des revendications précédentes,
dans lequel la deuxième barre (20) est vérifiée en contrôlant si des pixels sont présents au-dessus du point d'extrémité supérieur (21) de la deuxième barre (20) ou au-dessous du point d'extrémité inférieur (23) de la deuxième barre (20), lesquels pixels présentent une valeur de gris supérieure à un seuil de valeur de gris ou une valeur de couleur située à l'extérieur d'une plage de valeurs de couleur, ou si un contraste d'une valeur de gris ou d'une valeur de couleur de la deuxième barre (20) par rapport à la valeur de gris ou à la valeur de couleur des pixels situés au-dessus et/ou au-dessous du point d'extrémité supérieur (21), respectivement inférieur (23), est égal ou supérieur à un seuil de contraste.

14. Procédé selon l'une des revendications précédentes, comprenant
la répétition de la détermination d'un paramètre de hauteur de barre d'une barre adjacente et la répétition de la vérification du paramètre de hauteur de code-barres dans la première direction (50) et dans une deuxième direction opposée à la première direction (50) jusqu'à ce que toutes les barres (10, 20) de la pluralité de barres aient été détectées; et
l'attribution d'un type de barre à chacune des barres (10, 20) de la pluralité de barres sur la base du paramètre de hauteur de barre déterminé de la barre respective et sur la base du paramètre de hauteur de code-barres estimé (31, 32, 33, 34, 51, 53), dans lequel, pour l'attribution d'un type de barre à la barre respective (10, 20), une distance d'un point d'extrémité supérieur (11, 21) ou inférieur (13, 23) de la barre respective (10, 20) par rapport à la position de hauteur de code-barres supérieure (31, 51), respectivement inférieure (33, 53), estimée est déterminée et le type de barre est ensuite défini selon que la distance déterminée est égale ou inférieure à un seuil de distance, dans lequel le seuil de distance est défini en supposant un type de code-barres, dans lequel l'attribution des types de barres aux barres (10, 20) est vérifiée quant à sa plausibilité, dans lequel, en cas de négation de la plausibilité, l'attribution des types de barres aux barres (10 20) est vérifiée en supposant un autre type de code-barres.

15. Système de détection et/ou de lecture d'un code-barres codé en hauteur et en position de barre (30) à partir de données d'image relatives au code-barres (30), comprenant
une caméra configurée pour enregistrer des données d'image relatives au code-barres (30); et
un dispositif de traitement configuré, sur la base des données d'image relatives au code-barres (30),
pour déterminer au moins un paramètre de hauteur de barre (11, 12, 13, 14) et une position d'une première barre (10) d'une pluralité de barres du code-barres (30),
pour estimer au moins un paramètre de hauteur de code-barres (31, 32, 33, 34, 51, 53) du code-barres (30) sur la base du paramètre de hauteur de barre (11, 12, 13, 14) de la première barre (10),
**caractérisé en ce que** le dispositif de traitement est configuré, sur la base des données d'image relatives au code-barres (30),
à partir de la position de la première barre (10) dans une première direction (50), pour déterminer au moins un paramètre de hauteur de barre (21, 22, 23) et une position d'une deuxième barre adjacente (20) de la pluralité de barres du code-barres (30);
pour vérifier le paramètre de hauteur de code-barres estimé (31, 32, 33, 34, 51, 53) sur la base du paramètre de hauteur de barre (21, 22, 23) de la deuxième barre (20); et
pour attribuer un type de barre à chacune des barres (10, 20) sur la base du paramètre de hauteur de barre déterminé (11, 12, 13, 14, 21, 22, 23) des barres respectives et sur la base du paramètre de hauteur de code-barres estimé (31, 32, 33, 34, 51, 53).
